(19) Europäisches Patentamt / European Patent Office / Office européen des brevets

(11) **EP 4 620 907 A1**

(12) **EUROPEAN PATENT APPLICATION**

(43) Date of publication:
24.09.2025 Bulletin 2025/39

(21) Application number: 25165118.8

(22) Date of filing: 20.03.2025

(51) International Patent Classification (IPC):
**C01B 3/50** *(2006.01)*    **C01B 3/04** *(2006.01)*
**F25J 3/06** *(2006.01)*

(52) Cooperative Patent Classification (CPC):
**C01B 3/047; C01B 3/506; F25J 1/00;**
C01B 2203/043; C01B 2203/0495; F25J 3/0655;
F25J 3/066; F25J 3/068; F25J 2210/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 21.03.2024 US 202418611919

(71) Applicant: Air Products and Chemicals, Inc.
Allentown, PA 18106-5500 (US)

(72) Inventors:
• BERGER, Alan D.
Ambler, PA 19002 (US)
• WHITE, Vincent
Ashtead, KT21 1SE (GB)
• WEIST, Edward Landis Jr.
Allentown, PA 18062 (US)

(74) Representative: Beck Greener LLP
Fulwood House
12 Fulwood Place
London WC1V 6HR (GB)

(54) **PROCESS AND APPARATUS FOR CRACKING AMMONIA**

(57) In a process in which ammonia is cracked to form a hydrogen gas product and an offgas comprising nitrogen gas, residual hydrogen gas and residual ammonia gas, residual ammonia is recovered from the offgas from the hydrogen recovery process by partial condensation and phase separation, and hydrogen is recovered from the resultant ammonia-lean offgas by partial condensation and phase separation. The recovered ammonia may be recycled the cracking process and the recovered hydrogen may be recycled to the hydrogen recovery process to improve hydrogen recovery from the cracked gas. Overall hydrogen recovery from the ammonia may thereby be increased to over 99%.

FIG. 2

**Description**

The present invention is in the field of ammonia cracking to produce hydrogen and relates specifically to recovering ammonia and hydrogen from offgas generated in the primary hydrogen recovery process.

Global interest in renewable energy and using this renewable energy to generate "green" hydrogen has driven the interest in converting the "grepen" hydrogen to "green" ammonia, as ammonia is simpler to transport over distance of hundreds or thousands of miles. Particularly, shipping liquid hydrogen is not commercially possible currently but shipping ammonia, which is in a liquid state, is currently practiced.

For use in a commercial fuel cell, the ammonia must be converted back to hydrogen according to the reaction.

$$2NH_3 \rightleftharpoons 3H_2 + N_2$$

This is an endothermic process, i.e., a process that requires heat, and hence higher temperatures will favor production of the products. The standard heat of reaction (per mole of ammonia) at 1 bar and 0°C is 45.47 kJ/mol. The endothermic nature of the process dictates the need for a furnace.

The process is known as cracking (or sometimes "dissociation") and is usually performed over a catalyst. The gas produced (or "cracked gas") is a mixture of hydrogen ($H_2$) and nitrogen ($N_2$) gases although, since the cracking reaction is an equilibrium reaction, there is also some residual ammonia. The amount of ammonia in the cracked gas, generally referred to as "ammonia slip", may be varied by changing the temperature and pressure at which the ammonia is cracked with higher temperatures and pressures favoring conversion thereby reducing the ammonia slip.

In this regard, conducting the cracking reactions at higher pressures is preferred as this reduces the amount of compression power required to deliver the renewable hydrogen at the product pressure. However, a higher-pressure reaction means more unconverted ammonia in the cracked stream. On the other hand, the use of higher temperatures reduces ammonia slip, increasing conversion of ammonia to hydrogen, but temperature is limited by nitridation of the metal of the reactors, *etc.* Therefore, a typical ammonia slip in the cracked gas is around 1.3% to 1.5%.

In most applications of crackers currently, the hydrogen and nitrogen mixture is utilised as is. However, as ammonia can be a poison to fuel cells, this stream, with ammonia suitably removed such as by scrubbing with water, can be used directly in a fuel cell. However, if the hydrogen is to be used in vehicle fueling, the nitrogen present provides a penalty to the process. The fuel to a vehicle fueling system is compressed to significant pressure - up to 900 bar. This means that the nitrogen, which is merely a diluent in the process, is also compressed, taking power, and taking storage volume and increasing anode gas purge requirement, decreasing efficiency. It is therefore beneficial where hydrogen is to be used in vehicle fueling, for the hydrogen and nitrogen to be separated.

There are many examples of ammonia cracking processes in the art, for example WO2019/038251A, WO2022/189560A and US2023/0242395A.

WO2019/038251A discloses a process for producing hydrogen and nitrogen from ammonia comprising non-catalytic oxidation of ammonia with oxygen to produce a process gas containing nitrogen, water, nitrogen oxides and residual amounts of ammonia, and then cracking residual ammonia in the process gas while simultaneously reducing nitrogen oxides with hydrogen to form nitrogen and water over a nickel-catalyst. Unconverted ammonia is recovered from the process gas by washing with water.

WO2022/189560A discloses a process for cracking ammonia comprising partially cracking the feed in an adiabatic reactor and cracking the partially cracked ammonia in a cracking reactor such as an electrically heated reactor. Hydrogen is recovered from the cracked gas in a hydrogen recovery unit producing a hydrogen product gas and an offgas comprising hydrogen, nitrogen and optionally unconverted ammonia which may be scrubbed from the offgas using water.

US2023/0242395A discloses an ammonia cracking process in which hydrogen is recovered from the cracked gas using a pressure swing adsorption (PSA) device. Hydrogen is recovered from the PSA tail gas using membranes and either recycled to the PSA device for further processing or mixed into the hydrogen product gas. Ammonia may be recovered from the tail gas before or after the membranes by adsorption, e.g., by temperature swing adsorption (TSA); by absorption, *e.g.,* by washing with water in a scrubber column; or by partial condensation and phase separation, and the recovered ammonia recycled to the ammonia cracking stage.

The use of a PSA may recover up to 97% of the hydrogen from the cracked gas if appropriately designed. Ammonia recovery from the cracked gas is not required for the PSA. However, without recovering ammonia from the cracked gas, hydrogen recovery from ammonia cannot exceed about 93% with a PSA recovery of about 95%.

If ammonia recovery is desirable from the point of view of improving hydrogen recovery, then the art teaches the use of a water-wash/absorber column arrangement and, to recover ammonia from this water, a stripping column is required. Such a column has a reboiler that boils the ammonia-containing water from the absorber. However, heat must be applied to the reboiler, resulting in additional fuel cost and associated carbon dioxide emissions, above and beyond the heat that is already used in the cracking process.

There is, however, still a need generally for improved processes for the production of hydrogen from ammonia and specifically for processes that have higher levels of hydrogen recovery from the feed ammonia.

According to a first aspect of the present invention, there is provided a process for cracking ammonia comprising providing a heated ammonia gas at super-atmospheric pressure; cracking the heated ammonia gas in an ammonia cracking system to produce a cracked gas comprising hydrogen gas, nitrogen gas and residual ammonia gas; cooling the cracked gas by heat exchange to produce cooled cracked gas; recovering hydrogen from the cooled cracked gas in a hydrogen recovery unit to produce a hydrogen gas product and an offgas comprising nitrogen gas, residual hydrogen gas and residual ammonia gas; recovering residual ammonia from at least a portion of the offgas, or from a combined gas comprising the offgas, by partial condensation and phase separation to produce a recovered liquid ammonia and an ammonia-lean offgas comprising nitrogen gas and residual hydrogen gas; and recovering residual hydrogen from the ammonia-lean offgas, or from an ammonia-free offgas derived therefrom, by partial condensation and phase separation to produce a hydrogen-rich gas and a nitrogen-rich liquid.

Embodiments of the present invention enable an increase in the recovery of hydrogen from the feed ammonia. For example, in embodiments where hydrogen is recovered from the cracked gas in a PSA system, the PSA system may be operated at 85% recovery and yet overall hydrogen recovery from the ammonia is typically about 99% or more.

Another advantage is that the performance of the ammonia cracking system is less sensitive to catalyst performance. Indeed, slip variations up to the design maximum (e.g., 3 mol. %) may be accommodated as catalyst ages.

According to a second aspect of the present invention, there is provided apparatus for cracking ammonia comprising an ammonia cracking system comprising an inlet for heated ammonia gas at super-atmospheric pressure and an outlet for cracked gas comprising hydrogen gas, nitrogen gas and residual ammonia gas; a hydrogen recovery unit comprising an inlet for cooled cracked gas in fluid flow communication with the outlet of the ammonia cracking system, a first outlet for hydrogen gas product and a second outlet for offgas comprising nitrogen gas, residual hydrogen gas and residual ammonia gas; a first phase separator comprising an inlet for partially condensed offgas in fluid flow communication with the second outlet of the hydrogen recovery unit, a first outlet for recovered liquid ammonia and a second outlet for ammonia-lean offgas comprising nitrogen gas and residual hydrogen gas; and a second phase separator comprising an inlet for partially condensed ammonia-lean offgas in fluid flow communication with the second outlet of the first phase separator, a first outlet for hydrogen-rich gas and a second outlet for nitrogen-rich liquid, wherein the apparatus comprises a heat exchange system comprising a heat exchanger located between the outlet of the ammonia cracking system and the inlet of the hydrogen recovery unit, and arranged to cool cracked gas by heat exchange against one or more "cold" process fluids; a heat exchanger located between the second outlet of the hydrogen recovery unit and the first phase separator, and arranged to condense residual ammonia gas in offgas by heat exchange against one of more "cold" process fluids; and a heat exchanger located between the second outlet of the first phase separator and the inlet of the second phase separator, and arranged to condense nitrogen in ammonia-lean offgas by heat exchange against one of more "cold" process fluids.

The apparatus of the second aspect of the invention is suitable to carry out the process of the first aspect of the invention.

FIG. 1 is a simplified flowsheet for a reference process for cracking ammonia and recovering hydrogen from the cracked gas using a PSA system U501.

FIG. 2 is a simplified flowsheet for an embodiment of the present invention comprising a cryogenic recovery system 200 for recovering ammonia from PSA offgas generated by the PSA system U501.

FIG. 3 is a simplified flowsheet for a first configuration of the cryogenic recovery system 200 depicted in FIG. 2.

FIG. 4 is a simplified flowsheet for a second configuration of the cryogenic recovery system 200 depicted in FIG. 2.

Throughout the specification, any references to pressure are references to absolute pressure unless otherwise stated. In addition, all percentages are calculated on the basis of molarity, *i.e.*, mol. %, unless otherwise stated or obvious from the context.

The term "super-atmospheric pressure" will be understood to mean a pressure that is significantly higher than atmospheric pressure, such as a pressure of at least 5 bar, *e.g.,* a pressure of at least 10 bar, or of at least 20 bar or of at least 30 bar. Typically, the pressure is no more than 60 bar.

The expression "hydrogen-enriched" in the context of a hydrogen-enriched gas (or other fluid) is intended to describe the composition of a product fluid in which the proportion of hydrogen is greater than in the feed from which the product fluid is generated. Corresponding expressions involving different gases, *e.g.*, the expression "nitrogen-enriched", are to be interpreted accordingly. A hydrogen-enriched fluid may comprise for example at least 50 mol. % hydrogen and a nitrogen-enriched fluid may comprise for example at least 95 mol. % nitrogen.

The expression "hydrogen-rich" in the context of a hydrogen-rich gas (or other fluid) is intended to describe a fluid mixture containing hydrogen as the primary or most abundant component, together with at least one other component.

Typically, at least 50 mol. % or at least 75 mol. %, of the fluid mixture is hydrogen. Corresponding expressions involving different gases, *e.g.*, the expression "nitrogen-rich", are to be interpreted accordingly. Indeed, a nitrogen-rich fluid may typically comprise at least 90 mol. %, *e.g.,* at least 95 mol. % or at least 98 mol. %, nitrogen.

The expression "ammonia-depleted" in the context of an ammonia-depleted gas (or other fluid) is intended to describe the composition of a product fluid in which the proportion of ammonia is less than in feed from which the product fluid is generated. The expression "ammonia-lean" in the context of an ammonia-lean gas (or other fluid) is intended to describe a fluid comprising no more than a small amount, *e.g.*, no more than 1 mol. %, of ammonia. The expression "ammonia-free" in the context of an ammonia-free gas (or other fluid) is intended to describe a fluid containing no ammonia or only trace amounts of ammonia, *e.g.*, no more than 10 ppm, preferably no more than 1 ppm, ammonia. Corresponding expressions involving different gases are to be interpreted accordingly.

The expression "partially condensed" in the context of a partially condensed fluid is intended to refer to the fluid having both a vapor phase and a liquid phase.

The expression "refrigeration duty" is intended to refer to the cooling duty provided by the transfer of latent heat and/or sensible heat between fluids at different temperatures.

A "cold" process fluid is any fluid from the cold end of the process. Such fluids are capable of providing refrigeration duty and include nitrogen-rich liquid (or gas), nitrogen-enriched liquid (or gas), hydrogen-rich gas and hydrogen-enriched gas and may also include one or more of liquid ammonia, recovered ammonia liquid and ammonia-lean offgas.

The expression "located between" in the context of a heat exchanger being located between two other apparatus units that are in fluid flow communication with each other will be understood to mean that the heat exchanger is provided at a position intermediate to the positions of the other apparatus units where it is able to alter the temperature of a process fluid flowing from one apparatus unit to the other.

In the context of the present invention, the activity of a catalyst will be understood to refer to the rate of conversion of ammonia at a given partial pressure for a given amount of catalyst over a given period of time at a particular temperature and overall pressure. The units used to define the activity of a heterogeneous catalyst are mole of ammonia converted per gram of catalyst (including substrate if present) per second (or mol. $g^{-1}$ $s^{-1}$).

The expression "in fluid flow communication" will be understood to mean that piping or other suitable conduits will be used to convey fluid from one specified location to another. During passage between the two locations, the fluid may flow through one or more other units which may be designed and/or arranged to alter the physical condition, *e.g.*, temperature (*e.g.*, a heat exchanger) and/or pressure (*e.g.*, a compressor, a pump, a pressure reduction valve or an expander) of the fluid, or the composition of the fluid either through reaction of components within the fluid (*e.g.*, a catalytic reactor). In cases where the fluid is a gas, the gas may additionally or alternatively be used to regenerate one or more adsorbent beds. The expression "in direct fluid flow communication" will be understood to mean that the fluid flows directly from the one location to the other, *i.e.*, does not flow through another such unit during its passage and hence there is at least essentially no change to the composition or physical condition of the fluid.

The term "downstream" will be understood to mean in the same direction as the flow of fluid during normal operation. The term "upstream" will be interpreted accordingly.

The heat exchange system of the present invention comprises a plurality of heat exchangers. One or more of the heat exchangers may be individual heat exchangers such as shell-and-tube style heat exchangers. Alternatively, two or more of the heat exchangers may be adjacent passages within a single heat exchanger having multiple passages in which various process streams are cooled by heat exchange with one or more of the "cold" process streams and/or external refrigerant streams.

The heated ammonia gas feed of the present invention is typically generated from liquid ammonia which may be supplied at ambient pressure from either a pipeline or, more typically, a refrigerated storage tank. Water is often added to ammonia to prevent stress corrosion cracking in the storage tanks, trucks and ships used to transport ammonia. The presence of water in the feed ammonia turns the feed into a multi-component stream, and the evaporation of the feed stream would then require a higher temperature to achieve complete evaporation.

A typical composition of the ammonia feed is shown in Table 1.

TABLE 1

| Component | Composition |
| --- | --- |
| Ammonia | 99.5 to 99.8 wt. % |
| Maximum water content | 0.5 wt. % |
| Minimum water content | 0.2 wt. % |
| Oil | 5 ppm max |

(continued)

| Component | Composition |
|---|---|
| Inerts (*e.g.*, Ar) | <10 ppm |
| Iron | < 1 ppm |

Oil may be present in the ammonia due to a boil-off gas compressor used for the ammonia storage, either at the local storage tank, production location, or any other storage tank in between. The presence of oil is an issue because it presents a blockage and/or contamination risk. This may lead to malperformance in the heat exchangers or reduced catalyst activity in the reactors. Therefore, if present, the oil may need to be removed in some way. In this regard, the oil can be removed by passing the liquid ammonia through a bed of activated carbon. However, in preferred embodiments, the catalyst used in the adiabatic reaction unit will crack the oil into shorter chain hydrocarbons which may react with any water present to form carbon monoxide, hydrogen, and methane.

Inert gases are not expected to be an issue, other than they could end up in the product hydrogen. In this regard, helium can be present in ammonia derived from natural gas but ammonia from renewable hydrogen will not contain helium.

The liquid ammonia is typically taken from storage and pumped from the storage pressure (*e.g.*, about 1 bar) to a pressure in a range from about 5 bar to about 60 bar, e.g., from about 10 bar to about 50 bar such as from about 10 bar to about 30 bar or from about 40 bar to about 50 bar. The temperature of the liquid ammonia increases slightly from the storage temperature (*e.g.*, about -34°C) to about -32°C. If liquid ammonia is taken from a pipeline, the temperature of the liquid ammonia is usually higher, *e.g.*, about +10°C.

The pumped liquid ammonia (at super-atmospheric pressure) is then typically pre-heated to its boiling point, ideally by appropriate heat integration within the process. Preferably, part of the pre-heating is achieved using a heat transfer circuit where the heat, *e.g.*, from the intercooling and aftercooling of a PSA offgas compressor, is recovered using a heat transfer fluid such as an aqueous solution of a glycol, *e.g.*, an aqueous solution comprising from about 50 wt. % to about 60 wt. % of a glycol such as ethylene glycol or propylene glycol, optionally together with heat from the flue gas and/or cracked gas, and used to preheat the liquid ammonia. If no such integration is possible, such as if the compressor is not running, then heat from an external source, such as an electric heater, could be required to preheat the ammonia.

The pre-heated liquid ammonia is typically then evaporated, and the resultant ammonia gas heated further prior to being fed to the adiabatic reaction unit. In this regard, the ammonia gas is typically superheated, *i.e.*, heated to a temperature above its boiling point, to a temperature of more than 350°C to ensure a useful rate of reaction in the ammonia cracking system.

The duty for the evaporation and further heating of the pre-heated liquid ammonia may be provided by heat exchange with the cracked gas, the flue gas or a combination of both the cracked gas and the flue gas. In preferred embodiments, the cracked gas is used to heat and evaporate the pre-heated liquid ammonia by heat exchange and then the ammonia gas is further heated by heat exchange with the flue gas.

The heated ammonia gas is fed at super-atmospheric pressure to an ammonia cracking system. Any suitable system may be used and may comprise catalyst-containing reactor tubes heated either by electrical heating elements in an electrically heated tube reactor, or by combustion of a fuel in a direct fired tube reactor, or in some combination of these two types of reactor.

Renewable electricity, i.e., electricity generated from a sustainable energy source such as sunlight and/or wind, could be used to power the electrically heated tube reactor to lower the carbon intensity of the cracking process.

In a direct fired tube reactor, a fuel is combusted with an oxidant gas in a furnace to heat the catalyst-containing reactor tubes and produce a flue gas. At least the majority, *e.g.*, at least 50% or at least 75% or at least 90%, of the fuel for the combustion is typically provided by one of more fuels selected from $C_1$ to $C_3$ hydrocarbons, natural gas, *etc.,* even though the use of such fuels will increase the carbon intensity of the process. If carbon intensity is to be reduced, the natural gas fuel could be replaced by a lower carbon intensity fuel such as "blue" hydrogen, *i.e.*, hydrogen from a hydrocarbon process (such as reforming natural gas) with $CO_2$ capture. Other alternative fuels that target lower carbon intensity may include renewable natural gas (RNG), biogas, *etc.* The oxidant gas is typically air but may be an oxygen-enriched gas or pure oxygen as appropriate.

The reactor tubes are filled with at least one ammonia cracking catalyst. A large number of metals are known in the art to catalyze the cracking of ammonia. These metals include transition metals such those in Group 6 of the Periodic Table, *e.g.*, chromium (Cr) and molybdenum (Mo); Group 8, *e.g.*, iron (Fe), ruthenium (Ru) and osmium (Os); Group 9, *e.g.*, cobalt (Co), rhodium (Rh) and iridium (Ir); Group 10, *e.g.*, nickel (Ni), palladium (Pd) and platinum (Pt); and Group 11, *e.g.,* copper (Cu), silver (Ag) and gold (Au). Metalloids such as tellurium (Te) may also be used.

The activity of some of these metals as catalysts for ammonia cracking has been reported by Masel et al (Catalyst Letters, vol. 96, Nos 3-4, July 2004) to vary in the following order:

Ru > Ni > Rh > Co > Ir > Fe >> Pt > Cr > Pd > Cu >> Te

The metals may be unsupported but are usually supported on a suitable support, typically a metal oxide support such as silica ($SiO_2$), alumina ($Al_2O_3$), zirconia ($ZrO_2$) or a mixed metal oxide support such as spinel ($MgAl_2O_4$) or perovskite ($CaTiO_3$).

As would be understood by the skilled person, the activity of a supported metal catalyst will typically depend in part on the loading of the catalytically active metal on the support. In this regard, the loading of the metal will vary according to the specific requirements but will typically be in a range from about 0.1 wt % to about 70 wt %. The loading may be towards the lower end of the range, *e.g.*, from about 0.1 wt % to about 10 wt % or from about 0.2 wt % to about 5 wt %, for the more active metals, *e.g.*, ruthenium. For less active metals, *e.g.*, nickel, the loading may be towards the upper end of the range, *e.g.*, from about 20 wt % to about 65 wt %.

Supported metal catalysts may be unpromoted or may be promoted with at least one other metal, *e.g.*, one or more Group 1 metals, *e.g.*, lithium (Li), sodium (Na) and potassium (K); Group 2 metals, *e.g.*, magnesium (Mg) and calcium (Ca), or Group 13 metals, *e.g.*, aluminum (Al), to improve activity as is well known in the art.

Any conventional catalysts known for ammonia cracking may be used in the present invention. Suitable catalysts are disclosed in US2015/0217278A, Masel et al (above), Lamb et al (Int. J. Hydrogen Energy, 44 (2019) pp 3726-3736), Boisen et al (J. Catalysis 230 (2005) pp 309-312), US5055282A, US5976723A and US2020/0164346A.

Bimetallic catalysts, or catalysts containing two catalytically active metals, are also suitable for use with the present invention. Examples include the composite metal or metal alloys or metal nanoclusters supported on perovskites, composite oxides or nitrides, or mixed oxides or mixed nitrides disclosed in US2021/0001311A such as CoNi-MgSrCeO$_4$ and 1 wt % K-CoNi-MgSrCeO$_4$.

The catalyst(s) of the present invention comprises, *e.g.*, contains or consists of, at least one metal-based catalyst. The catalytically active metal is typically selected from the transitional metals of the Periodic Table. Suitable transition metal-based catalysts have an activity at a temperature in the range of 475°C to 600°C of more than 0.2 times, or more than 0.4 times, or more than 0.6 times, or more than 0.8 times, the rate calculated according to equation 9 proposed by Lamb *et al, i.e.,*

$$r = 8.73\ exp\ [-76710/RT].(P_{NH3})0.28.(P_{H2})\text{-}0.42.(1\text{-}\beta^2)$$

where:

"r" is the reaction rate (or "activity") of the catalyst;
"RT" is the ideal gas constant "R" (8.314 J mol$^{-1}$ K$^{-1}$) multiplied by the temperature "T" in Kelvin;
$P_{NH3}$ is the partial pressure of ammonia;
$P_{H2}$ is the partial pressure of hydrogen;
$\beta$ is define in the paper (see equation 5 proposed by Lamb *et al*) as

$$\beta = \frac{1}{K_e}\left(\frac{P_{N_2}^{0.5} P_{H_2}^{1.5}}{P_{NH_3}}\right)$$

$P_{N2}$ is the partial pressure of nitrogen; and
$K_e$ is the equilibrium constant for the reaction (see equations 6 & 7 proposed by Lamb *et al*).

The Inventors have realized that equation 9 of Lamb *et al* may be extrapolated to temperatures outside 475°C to 600°C, *e.g.*, in the range from 450°C to 700°C.

The suitable transition metals will also typically be significantly cheaper than the precious metals, *i.e.*, gold, silver and the platinum group metals, *i.e.*, ruthenium, rhodium, palladium, osmium, iridium and platinum, in particular ruthenium. For example, the unit price of the suitable transition metals will typically be less than the unit price of ruthenium by a factor of at least 100, *e.g.,* by a factor of at least 300 or of at least 500. Precious metals are typically not suitable for use as the predominant catalytically active metal of the catalyst in the catalyst bed as they are too expensive.

Transition metals that are particularly suitable for use as the predominant catalytically active metal of the catalyst in the catalyst bed of the reactor tubes are selected from the first-row transition metals, *i.e.*, scandium, titanium, vanadium, chromium, manganese, iron, cobalt, nickel, copper and zinc, and may be selected from chromium, manganese, iron, cobalt, nickel and copper in particular. The catalyst may be a zeolite supporting chromium, copper, iron, nickel and/or cobalt.

The catalytically metal may be selected from the group consisting of iron, cobalt and nickel. Nickel is typically the most suitable metal in this regard.

However, in other embodiments, the reactor tubes of the furnace are filled with at least two different ammonia cracking catalysts having different activities, of which the first (less active) catalyst, *e.g.*, first row transition metal-based catalyst, is typically located in a layer upstream of the second (more active) catalyst, *e.g.*, ruthenium-based catalyst. The purpose of the more active downstream layer is to ensure that the cracking reaction approaches equilibrium. In some embodiments, the bed in each reactor tube has only two layers, the upstream layer of the first catalyst and the downstream layer of the second catalyst.

In embodiments having a downstream layer of more active catalyst, the upstream layer has a volume that may be at least 50%, or at least 60%, or at least 70%, or at least 80% of the volume of the entire catalyst bed. Typically, the volume of the upstream layer is not more than 95% of the volume of the catalyst bed.

While there may be an intervening layer between the upstream and downstream layers, this is not usually the case in these embodiments and the remainder of the catalytic bed is typically the downstream layer of more active catalyst. Thus, the downstream layer has a volume that may be no more than 50%, or no more than 40%, or no more than 30%, or no more than 20% of the volume of the entire catalyst bed. Typically, the volume of the downstream layer is at least 5% of the volume of the catalyst bed.

The term "nickel-based catalyst" refers to a catalyst containing nickel as the sole (or at least predominant) catalytically active metal, *i.e.*, the metal responsible for catalyzing the cracking reaction. Nickel may be the only metal in the catalyst or alternatively one or more other metals may be present, *e.g.*, in a material supporting the nickel. The terms "ruthenium-based catalyst", "iron-based catalyst" and "first row transition metal-based catalyst" are intended to be interpreted accordingly.

Suitable nickel-based catalysts and ruthenium-based catalysts may be supported, for example, on alumina (as disclosed in Lamb *et al* or Masel *et al*) or spinel (as disclosed in Boisen *et al*), optionally promoted with a Group 1 or Group 2 metal.

As mentioned above, water is usually present in the ammonia as a contaminant. The water may be removed from the ammonia in which case catalysts which do not tolerate water, *e.g.*, iron-based catalysts, may be used in the reactor tubes. However, water is not removed in preferred embodiments to save capital and operational costs and to reduce energy consumption. In these embodiments, catalysts that cannot tolerate water, *e.g.*, iron-based catalysts, are not used. Instead, the catalysts in the reactor tubes would be able to tolerate up to 1 mol. % water in the ammonia feed. Such catalysts include nickel-based and ruthenium-based catalysts.

The feed to the catalyst-filled reactor tubes of the furnace may be at a temperature up to about 800°C. Typically, the feed is at a temperature in a range from about 500°C to about 800°C, or from about 600°C to about 700°C, *e.g.*, at about 650°C.

The cracking temperature and pressure typically dictate that the ammonia slip in the reactor tubes is no more than 3 mol. %, *e.g.*, from about 0.5 mol. % to about 1.5 mol. %. One advantage of embodiments of the present invention is that small increases in ammonia slip within the design specification of the process, due perhaps to malperformance of the catalyst(s) due to aging, can be accommodated due to the improved hydrogen recovery.

The heated ammonia gas is typically fed directly to the catalyst-containing reactor tubes, *i.e.*, without first cracking some of the ammonia to form partially cracked ammonia gas, to cause cracking of ammonia and produce the cracked gas. However, in some embodiments, the heated ammonia gas is partially cracked in an adiabatic reaction unit comprising at least one catalyst bed to produce partially cracked ammonia gas for feeding to the catalyst-filled reactor tubes in the electrically heated or direct fired tube reactor, *etc.*

The mole fraction of ammonia in the gas passing through the adiabatic reaction unit is typically reduced by at least 20%, *e.g.*, by at least 25%, or by at least 30%, or even by at least 35%, *e.g.*, by at least about 40%, and/or up to about 50%. Put another way, the mole fraction of ammonia may be reduced from 1 (or almost 1) in the heated ammonia gas to an amount in a range from about 0.5 to about 0.8, or to an amount in a range from about 0.5 to about 0.7, or to an amount in a range from about 0.55 to about 0.65, or to an amount in a range from about 0.55 to about 0.60, *e.g.*, about 0.57, in the partially cracked ammonia gas.

The adiabatic reaction unit may be incorporated into the design of the process to improve overall efficiency, specifically by using the heat available in the flue gas to provide heat to the adiabatic cracking process within this unit. In this regard, the temperatures around the adiabatic reaction unit are typically optimized to maximise the recovery of heat from the flue gas.

The key design parameter for the adiabatic reaction unit is the inlet temperature. A higher inlet temperature allows greater conversion in the unit since the ammonia cracking reaction is endothermic. However, higher temperatures put greater demands on the materials of construction and the catalyst. The inlet temperature is therefore typically in a range from about 350°C to about 800°C, or from about 500°C to about 700°C, or from about 550°C to about 650°C.

Due to the high temperatures and ammonia concentrations involved, the reactor tubes of the cracking reactors may typically be constructed from materials resistant to ammonia and/or ammonia nitriding. Suitable materials include nickel-based alloys comprising at least 40 wt. % or at least 50 wt. % nickel. Such alloys typically have no more than 90 wt. %, or no more than 80 wt. % nickel. The alloys will typically comprise one or more other metals selected from chromium, cobalt, molybdenum and iron.

Specific examples of suitable nickel-based alloys include UNS N06600, N06625, N06601, N06617, N06025, N06230, N07214, N08811. In some embodiments, austenitic nickel-chromium based superalloys such as Inconel may be used.

The unified numbering system (UNS) is an alloy designation system that is widely accepted in North America. Each UNS number relates to a specific metal or alloy and defines its specific chemical composition, or in some cases a specific mechanical or physical property.

Other suitable materials include cobalt-based alloys such as UNS R30188. In addition, high temperature alloys that are less resistant to ammonia nitriding, such as UNS N08811 or cast alloys such as HPNb, HP Micro-Alloyed, MA-1 (MetalTek International, USA), may be suitable, particularly when surface modified or coated by a corrosion resistant layer such as aluminization; aluminization and then pre-oxidation; or a ceramics coating. Nitriding resistant alloys can also be used with surface modification or coating for improved performance.

The adiabatic reaction unit will typically comprise one or more adiabatic reactors, the or each reactor comprising a catalyst bed. The or each adiabatic reactor may be made from one or more of the ammonia-resistant and/or ammonia nitriding-resistant materials list above.

In preferred embodiments, the adiabatic reaction unit will comprise two or more adiabatic reactors, *e.g.*, two, three, four, five or six reactors, with interstage heating as appropriate. The reactors may be arranged in series or in parallel or in a combination of series and parallel depending on the requirements of the process. However, in preferred embodiments, the adiabatic reaction unit will have two such reactors arranged in series with interstage heating of the intermediate partially cracked ammonia gas by heat exchange against the cracked gas or the flue gas.

Each adiabatic reactor has a bed comprising at least one catalyst suitable for cracking ammonia. Any conventional ammonia cracking catalyst may be used in the bed of the or each adiabatic reactor. Suitable catalysts are discussed above in the context of the catalysts for the reactor tubes.

In embodiments where water is removed from the ammonia prior to cracking, catalysts that are not tolerant to water, *e.g.*, iron-based catalysts, may be used in the adiabatic reactor(s). However, water is not removed in preferred embodiments to save capital and operational costs and to reduce energy consumption. In these embodiments, the catalyst beds of the adiabatic reaction unit contain no iron-based catalyst and, instead, the use of water tolerant catalysts, i.e., metal-based catalysts that are tolerant to the presence of up to 1 mol. % water, are preferred. In this regard, either nickel-based catalysts or ruthenium-based catalysts, or a combination of nickel-based catalysts and ruthenium-based catalysts may be used in the bed(s) of the adiabatic reactor unit.

As mentioned above, ruthenium-based catalysts tend to be more active than nickel-based catalysts but are more expensive. Therefore, further optimization is possible by selection of the catalyst and, if more than one type of catalyst is used, by the ordering of layers of the catalysts within the bed(s) of the adiabatic reaction unit.

In some embodiments having two adiabatic reactors in series, the catalyst bed of the first reactor comprises, *e.g.*, contains or consists of, a single layer of a first catalyst, *e.g.*, a ruthenium-based catalyst, and the catalyst bed of the second reactor comprises, *e.g.*, contains or consists of, an upstream layer of a second catalyst, *e.g.*, a nickel-based catalyst, that is typically less active that then first catalyst, and a downstream layer of a third catalyst, *e.g.*, a ruthenium-based catalyst, that is typically more active than the second catalyst.

In these embodiments, the first and third catalysts may be identical. Alternatively, the first and third catalysts may be different, *e.g.*, contain different catalytically active metals or contain the same catalytically active metals but on different supports or contain the same catalytically active metals on the same supports but at different loadings.

In other embodiments having two adiabatic reactors in series, the catalyst bed of the first reactor comprises, *e.g.*, contains or consists of, a single layer of a first catalyst, *e.g.*, a nickel-based catalyst, and the catalyst bed of the second reactor comprises, *e.g.*, contains or consists of, an upstream layer of a second catalyst, *e.g.*, a nickel-based catalyst, that typically has a similar activity to the first catalyst, and a downstream layer of a third catalyst, *e.g.*, a ruthenium-based catalyst, that is typically more active than the first and second catalysts.

In these embodiments, the first and second catalysts may be identical. Alternatively, the first and second catalysts may be different, *e.g.*, contain different catalytically active metals or contain the same catalytically active metals but on different supports or contain the same catalytically active metals on the same supports but at different loadings.

In both sets of embodiments, the volume of the upstream layer of the second catalyst in the bed of the second reactor may be from about 40% to about 90%, *e.g.*, from about 50% to about 70% or about 60%, of the total volume of the bed. In the absence of another layer of catalyst, the volume of the downstream layer of the third catalyst in the bed of the second reactor may be from about 10% to about 60%, *e.g.*, from about 30% to about 50%, or about 40%, of the total volume of the bed.

The Inventors have realized that ruthenium-based catalysts are not only tolerant to water but are also capable of cracking hydrocarbon oils into shorter hydrocarbons such as methane, together with carbon monoxide and hydrogen. Therefore, the use of these catalysts in the adiabatic reaction unit can eliminate the need for a dedicated unit upstream for removing the oil from the liquid ammonia.

It is also known that at higher temperatures, catalyst sintering reduces the activity and life of the catalyst. In this regard, the skilled person would be aware of the need to balance the improved conversion against the higher vessel costs and shorter catalyst life.

In most preferred embodiments, however, the bed of the or each adiabatic reactor contains a nickel-based catalyst which may or may not be identical to the catalyst used in the reactor tubes.

The heat from the cracked gas and the flue gas is typically used to heat the feed streams to the adiabatic reaction unit (where present) and furnace, thereby reducing the overall energy consumed by the process. In this regard, the temperature of the cracked gas may be up to about 750°C, *e.g.*, typically from about 650°C to about 750°C, or from about 675°C to about 725°C. The temperature of the flue gas may be up to about 840°C at its highest point. However, the temperature drops due to heat leak and is typically from about 700°C to about 800°C at the point where its heat can be utilized effectively.

Where an adiabatic reaction unit is used to partially crack the heated ammonia gas and the partially cracked gas is heated to the feed temperature of the catalyst-filled reactor tubes of the furnace, at least some of the duty required to heat the partially cracked gas is provided by heat exchange with the cracked gas. In preferred embodiments, the cracked gas is not used to heat another process fluid before heating the partially cracked gas. Some of this heating duty may be provided in another way, *e.g.*, by heat exchange with the flue gas. However, all of this heating duty is preferably provided by the cracked gas.

In preferred embodiments, the composition of the ammonia is typically at least substantially unchanged from the liquid ammonia in storage to the heated ammonia gas being fed to the adiabatic reaction unit. Oil present in the liquid ammonia may be removed at some point prior to partial cracking of the ammonia although, where ruthenium-based catalysts are used, the oil does not need to be removed. However, water is not typically removed so any water present in the liquid ammonia will also be present in heated ammonia gas.

Where the partially cracked gas is heated by heat exchange with the cracked gas, the temperature of the cracked gas is reduced. The cooled cracked gas is then typically further cooled by providing at least part of the heating duty required to generate the heated ammonia gas from liquid ammonia. After cooling, hydrogen may be recovered from the cracked gas as product. Recovery may be achieved in a PSA process or by using one or more selectively permeable membranes, or by way of a combination of PSA and membrane separation. In preferred embodiments, hydrogen recovery is achieved in a PSA process alone, *i.e.*, without use of membrane separation.

In embodiments using a PSA process, an offgas comprising nitrogen gas, residual ammonia and residual hydrogen is generated. This offgas may be used as fuel for the combustion in the furnace. Alternatively, while part of the offgas may be used as fuel, another part may be compressed and returned to the PSA process to improve hydrogen recovery.

Aspects of the invention include:

#1. A process for cracking ammonia comprising providing a heated ammonia gas at super-atmospheric pressure; cracking the heated ammonia gas in an ammonia cracking system to produce a cracked gas comprising hydrogen gas, nitrogen gas and residual ammonia gas; cooling the cracked gas by heat exchange to produce cooled cracked gas; recovering hydrogen from the cooled cracked gas in a hydrogen recovery unit to produce a hydrogen gas product and an offgas comprising nitrogen gas, residual hydrogen gas and residual ammonia gas; recovering residual ammonia from at least a portion of the offgas, or from a combined gas comprising the offgas, by partial condensation and phase separation to produce a recovered liquid ammonia and an ammonia-lean offgas comprising nitrogen gas and residual hydrogen gas; and recovering residual hydrogen from the ammonia-lean offgas, or from an ammonia-free offgas derived therefrom, by partial condensation and phase separation to produce a hydrogen-rich gas and a nitrogen-rich liquid.

#2. A process according to #1, wherein at least a portion of the recovered liquid ammonia, or of a liquid ammonia derived therefrom, is recycled to the ammonia cracking system.

#3. A process according to #1 or #2, wherein said recovering residual ammonia from the offgas, or from a combined gas comprising the offgas, comprises compressing the offgas, or the combined gas comprising the offgas, to form a compressed offgas; drying the compressed offgas to form a dry, compressed offgas; cooling the dry, compressed offgas by heat exchange against one or more "cold" process fluids, to condense residual ammonia and produce partially condensed offgas; and phase separating the partially condensed offgas to produce the recovered liquid ammonia and the ammonia-lean offgas.

#4. A process according to #3, wherein the compressed offgas is dried in a TSA process.

#5. A process according to any of #1 to #4 comprising reducing the pressure of the recovered liquid ammonia to produce reduced pressure liquid ammonia and an ammonia-rich flash gas; separating the reduced pressure liquid ammonia and the ammonia-rich flash gas; and recycling the reduced pressure liquid ammonia to the ammonia cracking system.

#6. A process according to #5 wherein the recovered liquid ammonia is warmed by heat exchange against one or more process fluids being cooled, prior to being reduced in pressure.

#7. A process according to #5 or #6, wherein the ammonia cracking system involves combustion of fuel to provide heat for the cracking process and the ammonia-rich flash gas is used to provide a portion of the fuel.

#8. A process according to any of #1 to #7, wherein said recovering residual hydrogen from the ammonia-lean offgas comprises cooling the ammonia-lean offgas, or an ammonia-free offgas derived therefrom, by heat exchange against one or more "cold" process fluids, to condense nitrogen and produce a partially condensed fluid; and separating the partially condensed fluid, optionally after reducing the pressure of the partially condensed fluid, to produce the hydrogen-rich gas and the nitrogen-rich liquid.

#9. A process according to any of #1 to #8, wherein more than a trace amount of ammonia is present in the ammonia-lean offgas, said process comprising removing ammonia from the ammonia-lean offgas by an adsorption process to produce an ammonia-free offgas.

#10. A process according to #9, wherein the adsorption process is a TSA process.

#11. A process according to any of #1 to #10, wherein the hydrogen-rich gas, or a regeneration outlet gas derived therefrom, is recycled to the hydrogen recovery unit.

#12. A process according to #11, wherein said recycling of the hydrogen-rich gas comprises warming the hydrogen-rich gas by heat exchange against one or more process fluids being cooled, to produce warmed hydrogen-rich gas; compressing the warmed hydrogen-rich gas to produce a compressed hydrogen-rich gas; and recycling the compressed hydrogen-rich gas, or the regeneration outlet gas derived therefrom, to the hydrogen recovery unit.

#13. A process according to any of #1 to #12, wherein at least a portion of the nitrogen-rich liquid and/or of a nitrogen-enriched liquid derived therefrom, is warmed by heat exchange against one of more process fluids being cooled, to produce a waste nitrogen gas.

#14. A process according to #13, wherein the ammonia cracking system involves combustion of fuel to provide heat for the cracking process and the waste nitrogen gas, or a regeneration outlet gas derived therefrom, comprising hydrogen and/or ammonia is used to provide a portion of the fuel.

#15. A process according to any of #1 to #14 comprising reducing the pressure of at least a portion of the nitrogen-rich liquid to produce reduced pressure nitrogen-enriched liquid and a hydrogen-enriched flash gas; separating the reduced pressure nitrogen-enriched liquid from the hydrogen-enriched flash gas; and recycling the hydrogen-enriched flash gas to the offgas from the hydrogen recovery unit.

#16. A process according to #15, wherein said recycling of the hydrogen-enriched flash gas comprises warming the hydrogen-enriched flash gas by heat exchange against one or more process fluids being cooled, to produce warmed hydrogen-enriched flash gas; and combining the hydrogen-enriched flash gas, or a reduced pressure hydrogen-enriched flash gas derived therefrom, with the offgas from the hydrogen recovery unit at an appropriate point in the compression system, to form the combined gas.

#17. Apparatus for cracking ammonia comprising an ammonia cracking system comprising an inlet for heated ammonia gas at super-atmospheric pressure and an outlet for cracked gas comprising hydrogen gas, nitrogen gas and residual ammonia gas; a hydrogen recovery unit comprising an inlet for cooled cracked gas in fluid flow communication with the outlet of the ammonia cracking system, a first outlet for hydrogen gas product and a second outlet for offgas comprising nitrogen gas, residual hydrogen gas and residual ammonia gas; a first phase separator comprising an inlet for partially condensed offgas in fluid flow communication with the second outlet of the hydrogen recovery unit, a first outlet for recovered liquid ammonia and a second outlet for ammonia-lean offgas comprising nitrogen gas and residual hydrogen gas; and a second phase separator comprising an inlet for partially condensed ammonia-lean offgas in fluid flow communication with the second outlet of the first phase separator, a first outlet for hydrogen-rich gas and a second outlet for nitrogen-rich liquid, wherein the apparatus comprises a heat exchange system comprising a heat exchanger located between the outlet of the ammonia cracking system and the inlet of the hydrogen recovery unit, and arranged to cool cracked gas by heat exchange against ammonia feed to the ammonia cracking system; a heat exchanger located between the second outlet of the hydrogen recovery unit and the first phase separator, and arranged to condense residual ammonia gas in offgas by heat exchange against one of more "cold" process fluids; and a heat exchanger located between the second outlet of the first phase separator and the inlet of the second phase separator, and arranged to condense nitrogen in ammonia-lean offgas by heat exchange against one of more "cold" process fluids.

#18. Apparatus according to #17, wherein the first outlet of the first phase separator is in fluid flow communication with the inlet of the ammonia cracking system.

#19. Apparatus according to #17 or #18 comprising an offgas compression system comprising an inlet for offgas in fluid flow communication with the second outlet of the hydrogen recovery unit, and an outlet for compressed offgas; and a dryer comprising an inlet for compressed offgas in fluid flow communication with the outlet of the offgas compression system and an outlet for dry, compressed offgas in fluid flow communication with the inlet of the first phase separator.

#20. Apparatus according to #19 wherein the dryer is a TSA unit.

#21. Apparatus according to any of #17 to #20 comprising a pressure reducing valve comprising an inlet for recovered liquid ammonia in fluid flow communication with the first outlet of the first phase separator and an outlet for a two-phase fluid comprising reduced pressure liquid ammonia and ammonia-rich flash gas; a further phase separator comprising an inlet for a two-phase fluid comprising reduced pressure liquid ammonia and ammonia-rich flash gas in fluid flow communication with the outlet of the pressure reducing valve, a first outlet for liquid ammonia and a second outlet for ammonia-rich flash gas in fluid flow communication with the inlet of the ammonia cracking system.

#22. Apparatus according to #21, wherein the heat exchange system comprises a heat exchanger located between the first outlet of the first phase separator and the inlet of the pressure reducing valve, and arranged to warm recovered liquid ammonia by heat exchange against offgas from the hydrogen recovery unit and/or ammonia-lean offgas.

#23. Apparatus according to #21 or #22, wherein the ammonia cracking system comprises a furnace comprising at least one inlet for fuel and oxidant gas in fluid flow communication with at least one burner, catalyst-containing reactor tubes having upstream ends in fluid flow communication with the inlet of the ammonia cracking system and downstream ends in fluid flow communication with the outlet for cracked gas; and a convection section in fluid flow communication with the radiant section and comprising an outlet for flue gas, wherein the second outlet of the further phase separator is in fluid flow communication with the at least one inlet of the furnace.

#24. Apparatus according to any of #17 to #23 comprising a pressure reducing valve comprising an inlet in fluid flow communication with the second outlet of the first phase separator and an outlet in fluid flow communication with the inlet of the second phase separator.

#25. Apparatus according to any of #17 to #24 comprising an ammonia removal unit comprising an inlet for ammonia-lean offgas in fluid flow communication with the second outlet of the first phase separator and an outlet for ammonia-free offgas in fluid flow communication with the inlet of the second phase separator.

#26. Apparatus according to #25, wherein the ammonia removal unit is a TSA unit.

#27. Apparatus according to any of #17 to #27, wherein the first outlet of the second phase separator is in fluid flow communication with the inlet of the hydrogen recovery unit.

#28. Apparatus according to any of #17 to #27 comprising a recovered hydrogen compression system comprising an inlet for hydrogen-rich gas in fluid flow communication with the first outlet of the second phase separator and an outlet for compressed hydrogen-rich gas in fluid flow communication with the inlet of the hydrogen recovery unit, wherein the heat exchange system comprises a heat exchanger located between the first outlet of the second phase separator and the inlet of the recovered hydrogen compression system, and arranged to warm hydrogen-rich gas by heat exchange against one or more process streams being cooled.

#29. Apparatus according to any of #17 to #29 comprising an expander for expanding nitrogen-rich gas, or nitrogen-enriched gas derived therefrom, to generate refrigeration for the process.

#30. Apparatus according to any of #17 to #29 comprising a pressure reducing valve comprising an inlet for nitrogen-rich liquid in fluid flow communication with the second outlet of the second phase separator and an outlet for a two-phase fluid comprising nitrogen-enriched liquid and hydrogen-enriched gas; a third phase separator comprising an inlet for a two-phase fluid comprising nitrogen-enriched liquid and hydrogen-enriched gas in fluid flow communication with the outlet of the pressure reducing valve, a first outlet for nitrogen-enriched liquid and a second outlet for hydrogen-enriched gas in fluid flow communication with an inlet of offgas compression system.

#31. Apparatus according to any of #17 to #30, wherein the ammonia cracking system comprises a furnace comprising at least one inlet for fuel and oxidant gas in fluid flow communication with at least one burner, catalyst-containing reactor tubes having upstream ends in fluid flow communication with the inlet of the ammonia cracking system and downstream ends in fluid flow communication with the outlet for cracked gas; and a convection section in fluid flow communication with the radiant section and comprising an outlet for flue gas, wherein the at least one inlet of the furnace is in fluid flow communication with the second outlet of the second phase separator.

The Inventors note that, as ammonia and hydrogen are being recovered, it is typically a small penalty to add a column to the process to purify the nitrogen to the point it could be sold as a product. With this in mind, the skilled person would appreciate that the present invention could be modified to produce pure nitrogen by augmenting the cold end partial condensation step with distillation, to further recover hydrogen from the liquid nitrogen and deliver a pure nitrogen stream.

The invention will now be described by way of example only with reference to the figures.

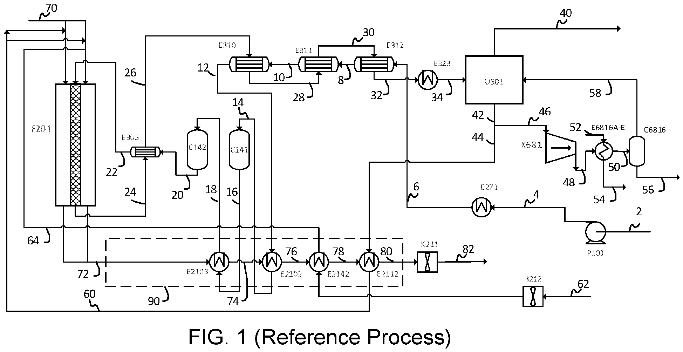

FIG. 1 depicts an ammonia cracking process 1 in which a stream 2 of liquid ammonia feed at about -32°C is removed from storage (not shown) and pumped in pump P101 to produce a stream 4 of pressurised liquid ammonia at a pressure of about 46 bar which is pre-heated by heat exchange with a heat transfer fluid which in this case is an aqueous solution of a glycol, typically about 55 wt. % ethylene glycol or propylene glycol, in heat exchanger E271 to produce stream 6 of pre-heated liquid ammonia at about 55°C. An electric heater may be used to ensure that the temperature of the glycol solution being fed to the heat exchanger E271 is sufficient to pre-heat the liquid ammonia to the required temperature.

The pre-heated liquid ammonia in stream 6 is further heated by heat exchange in heat exchanger E312 to produce a stream 8 of further heated liquid ammonia. The further heated liquid ammonia in stream 8 is then evaporated by heat exchange in heat exchanger E311 to produce a stream 10 of ammonia vapor. The ammonia vapor in stream 10 is then superheated by heat exchange in heat exchanger E310 to produce a stream 12 of heated ammonia gas at about 260°C.

The heated ammonia gas in stream 12 is further heated by heat exchange in heat exchanger E2102 to produce a stream 14 of superheated ammonia gas at about 420°C. For convenience, heat exchanger E2102 is indicated as a single unit. However, there may be in reality two separate heat exchangers with a selective catalytic reactor (SCR) located in between.

The superheated ammonia gas in stream 14 is fed at about 420°C and about 43 bar to the ammonia cracker system which in this embodiment comprises a first adiabatic reactor vessel C141, a second adiabatic reactor vessel C142 and a direct fired tube furnace F201 arranged in series.

Thus, stream 14 is fed to the first adiabatic reactor vessel C141 and passed through a bed of ruthenium-based catalyst. Some of the ammonia gas is cracked over the catalyst to form a stream 16 of intermediate gas that contains some cracked ammonia. The mole fraction of ammonia in the gas passing through the first adiabatic reactor vessel C141 drops from almost 1 to about 0.9.

The intermediate gas is at about 360°C before being heated by heat exchange in heat exchanger E2103 to produce a stream 18 of superheated intermediate gas which is then fed at about 590°C to a second adiabatic reactor vessel C142 and passed through a bed containing an upstream layer of nickel-based catalyst and a downstream layer of a ruthenium-based catalyst to produce a stream 20 of partially cracked ammonia gas. The mole fraction of ammonia in the gas passing through the second adiabatic reactor vessel C142 drops from about 0.9 to about 0.6.

The catalyst bed of the second adiabatic reactor vessel C142 has two layers - a layer of nickel-based catalyst over a layer of ruthenium-based catalyst to use the heat more efficiently and hence maximize ammonia conversion. The catalyst volumes are also optimized, i.e., minimizing the volume of the ruthenium-based catalyst by limiting the exit temperature of the second adiabatic reactor vessel to about 390°C. The Inventors found that reducing this temperature any further increases the volume required of the ruthenium-based catalyst.

The ruthenium-based catalyst is the same in both the first and second adiabatic reactor vessels. However, different ruthenium-based catalysts may be used.

The partially cracked ammonia in stream 20 is heated by heat exchange in a heat exchanger (or "economizer") E305 prior to being fed as stream 22 at a pressure of about 38 bar to catalyst-filled tubes in the radiant section F201 of a furnace (or reactor). Heating the feed to the tubes increases the amount of cracking that can be done with the heat from the burners by reducing the duty required to heat the partially cracked stream to the reaction temperature. Utilizing the cracked stream from the tubes allows efficient use of this high temperature stream. The inlet temperature of the direct fired tube furnace is limited to about 500°C to limit the inner wall temperature of the cracker tubes.

A stream 62 of air passed through forced draft fan K212 before being pre-heated by heat exchange in heat exchanger E2142 to produce a stream 64 of pre-heated air. The pre-heated air of stream 64 is fed to the burners (not shown) of the furnace F201 alongside a stream 70 of natural gas as fuel. Pre-heating the air in this way helps reduce the fuel requirement.

The tubes in the radiant section F201 of the furnace are filled with two types of ammonia cracking catalysts in two different layers. A ruthenium-based catalyst is used in the first layer within each tube so that the faster reaction rate allows the metals temperature to be kept to within the design limit of about 660°C. The second layer in the tubes, downstream of the first layer, contains a lower cost but less active nickel-based catalyst.

A stream 24 of cracked gas exits the radiant section F201 of the direct fired tube furnace at about 640°C and is then fed to economizer E305 to provide the duty required to heat the partially cracked ammonia, thereby reducing the temperature of the cracked gas to about 530°C.

The economizer E305 is depicted as a shell-and-tube style heat exchanger with the partially cracked ammonia gas passing through the tubes and the cracked gas passing through the shell side. However, this arrangement could be reversed or indeed a different style of heat exchanger could be used.

A stream 26 of cracked gas is then fed from the economizer E305 to heat exchanger E310 to provide the duty required to superheat the ammonia gas, thereby further reducing the temperature of the cracked gas to about 389°C.

A stream 28 of cracked gas is then fed from heat exchanger E310 to heat exchanger E311 to provide the duty required to evaporate the further heated liquid ammonia, thereby reducing the temperature of the cracked gas even further to about 109°C.

A stream 30 of cracked gas is then fed from heat exchanger E311 to heat exchanger E312 to provide the duty required to further heat the heated pressurized liquid ammonia, thereby reducing the temperature of the cracked gas further again to about 70°C.

Each of the heat exchangers E310, E311 and E312 is depicted as an individual shell-and-tube style heat exchanger with the ammonia passing through the tubes and the cracked gas passing through the shell side. However, this arrangement could be reversed for at least one, *e.g.*, all, of these heat exchangers. Alternatively, the heat exchangers could be combined into a single shell-and-tube style heat exchanger or indeed a different style of heat exchanger could be used.

A stream 32 of cracked gas from heat exchanger E312 is then cooled further by heat exchange with the heat transfer fluid in cooler E323 and then fed as stream 34 to PSA system U501 where it is separated into a stream 40 of hydrogen gas which is removed as product, and a stream 42 of PSA offgas comprising nitrogen gas, residual hydrogen gas and residual ammonia gas. The hydrogen gas in stream 40 may be fed to a hydrogen liquefaction unit (not shown) to produce liquid hydrogen.

All of the PSA off gas in stream 42 may be sent directly as fuel (stream 60) for combustion in the furnace F201. Alternatively, stream 42 may be divided into divided into two portions.

A first portion of the PSA off gas in stream 44 is heated by heat exchange in a heat exchanger E2112 to produce a stream 60 of warmed PSA offgas which is then fed to the burners in the furnace F201, together with air feed 64 and, optionally the natural gas feed 70 as required. A minimum amount of natural gas is used as trim fuel to provide the balance of fuel required in the fired section.

A second portion may be sent as stream 46 to a multistage compression unit K681 for compression. The compression unit K681 has five stages with an intercooler between each stage, together with an aftercooler following the last stage. Heat is recovered from the compressed gas in the intercoolers and the aftercooler by heat exchange with the heat transfer fluid. Heat may also be recovered from the lube oil used in the compression unit and, where a positive displacement compression unit is used, from the cylinder(s) of the compression unit using the heat transfer fluid.

For convenience, the intercoolers and aftercooler are indicated by a single heat exchanger (labelled as E6816A-E) that recovers heat from a stream 48 of compressed PSA offgas by heat exchange with a stream 52 of the heat transfer fluid to produce a stream 50 of cooled compressed PSA offgas and a stream 54 of warmed heat transfer fluid.

The heat transfer fluid warmed in the cooler E323 and in the intercoolers and aftercooler E6816A-E is then used to provide the duty required to preheat the liquid ammonia by heat exchange in heat exchanger E271.

The cooled compressed PSA off gas in stream 50 is fed to a phase separator C6816 in which any condensate is removed as stream 56. The compressed PSA offgas is then recycled to the PSA system U501 as stream 58 to recover further hydrogen. In this way, the recovery of hydrogen may be increased from 85% (without the recycle) to 95% (with the recycle). This figure could be increased even up to 97% with large enough vessels.

As indicated above, the process can be operated without compression unit K681, resulting in lower hydrogen recovery in the PSA unit 501. Reducing hydrogen recovery will obviously result in less hydrogen gas product. However, reduced hydrogen recovery may still be desirable as the carbon intensity (CI) for the process is lowered as more hydrogen would be in the offgas thereby reducing the requirement for natural gas as fuel and reducing carbon dioxide emissions.

A stream 72 of flue gas at about 686°C passes from the radiant section F201 to the convection section 90 of the furnace where it first provides the duty required to heat the intermediate gas from stream 16 in heat exchanger E2103 thereby reducing the temperature of the flue gas which is then used (as stream 74) to provide the duty required to further heat the heated ammonia gas from stream 12 in heat exchanger E2102 thereby reducing the temperature of the flue gas further. Therefore, the flue gas provides heating duty in a direction countercurrent to the flow of feed gas to the radiant section 23 of the direct fired tube furnace.

The cooled flue gas is then used (as stream 76) to provide the duty required to heat the air from stream 62 in heat exchanger E2142 thereby reducing the temperature of the flue gas further. The further cooled flue gas is then used (as stream 78) to provide the duty required to heat the PSA offgas from stream 42 in heat exchanger E2112 thereby cooling the flue gas further.

The cooled flue gas leaves the convection section 90 of the direct fired tube furnace F201 as stream 80 at a temperature of about 121°C, *i.e.*, above the dew point of water, passes through an induced draft fan K211 and then leaves the process as stream 82. All of the practical energy has been extracted from the flue gas at this point which may now be vented to atmosphere, optionally after further processing if required depending on its composition.

Oil may be present in the liquid ammonia in an amount up to about 5 ppm from boil-off gas compressors (not shown) used with ammonia storage tanks (not shown), either at the location where the ammonia is produced, or onsite where the ammonia is cracked, or indeed anywhere in transit between the two sites. The presence of oil in the ammonia may cause difficulties as the ammonia cracking catalysts may not tolerate the oil. Thus, it may be desirable to remove the oil before the ammonia is exposed to the catalysts. Oil may be removed by passing the ammonia through a bed of activated carbon.

If oil is to be removed from the ammonia, then an oil removal unit (not shown) may be located in stream 2 (*i.e.*, in the feed line to the pump P101), in stream 4 (*i.e.*, between pump P101 and glycol heater E271), in stream 6 (*i.e.*, between glycol heater E271 and heat exchanger E312), in stream 8 (*i.e.*, between heat exchangers E312 and E311) or in stream 10 (*i.e.*, between heat exchangers E311 and E310).

The process of FIG. 1 does not recover ammonia, other than in the offgas to be used as fuel in the furnace. However, the present invention enables the cycle in FIG. 1 to be run with the PSA system U501 operating at 85% recovery, *i.e.*, without the PSA recycle, while still achieving an overall recovery of at least 99% of the contained hydrogen from the feed ammonia by further processing the PSA offgas as discussed below.

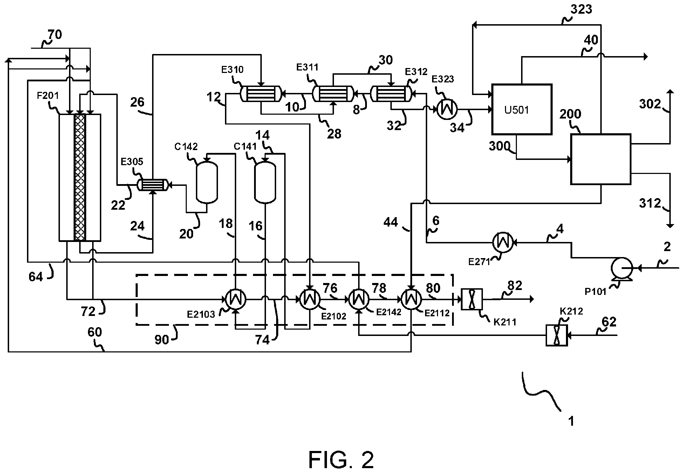

FIG. 2 is a simplified flowsheet depicting the process of FIG. 1 within which a cryogenic recovery system 200 has been integrated according to the present invention. The flowsheet is similar to that depicted in FIG. 1 and features common to both flowsheets have been given the same reference numerals. The following is a discussion of the different features.

A stream 300 of PSA offgas is taken from the PSA system U501 and fed to the cryogenic recovery system 200 wherein it is compressed, cooled and partially condensed to recover liquid ammonia in stream 312. The remaining vapour is further processed to recover hydrogen which is recycled in stream 323 to the PSA system U501 and produce a waste gas comprising predominantly nitrogen with some residual hydrogen gas which is fed as stream 44 to heat exchanger E2112 where it is warmed by heat exchange against flue gas before being fed as stream 60 to the burners in the radiant section of the furnace F201. Finally, a stream of aqueous ammonia-containing condensate is removed from the cryogenic recovery system 200 as stream 302. Stream 302 may be fed to a selective catalytic reduction (SCR) unit as disclosed in PCT/US2021/037996 (WO2022/265648A).

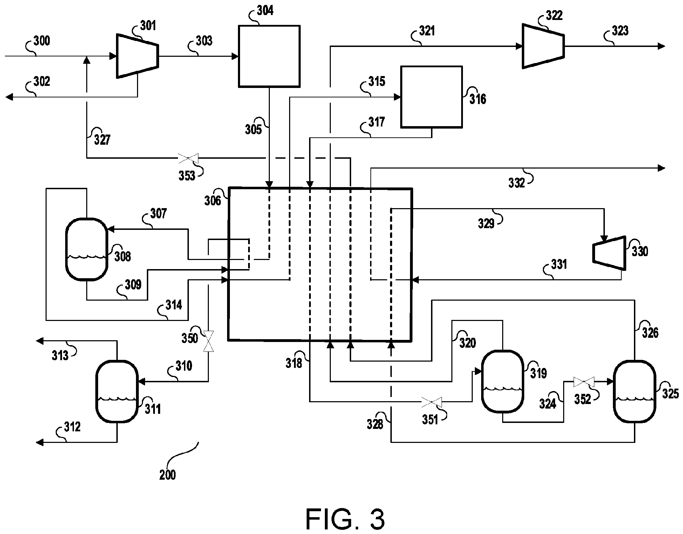

FIG. 3 is a simplified flowsheet depicting a first configuration of the process within the cryogenic recovery system 200 in FIG. 2. The features common to both flowsheets have been given the same reference numerals. The following is a discussion of the different features.

The stream 300 of PSA offgas at about 1.2 bar is fed to a compression system 301 where it is compressed to form a stream 303 of compressed PSA offgas at about 35 bar. The compressed offgas is fed to a dryer 304 where it is dried to form a stream 305 of dry, compressed offgas. The water is removed from the gas as it would otherwise freeze out in the next step.

Any suitable dryer may be used. However, in preferred embodiments, the dryer 304 is an adsorption unit, *e.g.*, a TSA unit.

The dry stream 305 is then fed to a heat exchanger 306 where it is cooled by heat exchange to about -68°C to condense ammonia in the offgas and form a stream 307 of partially condensed offgas. The vapour and liquid phases in stream 307 are separated in a first separator 308 to form a stream 309 of recovered liquid ammonia and a stream 314 of ammonia-lean offgas.

About 82% of the ammonia in the PSA offgas is recovered as the liquid phase in the first separator 308, the temperature of which is several, *e.g.*, about ten, degrees warmer than the freezing point of ammonia, which is about -78°C.

Stream 309 of recovered liquid ammonia may be recycled to the ammonia cracking system. As would be readily understood by the skilled person, the recovered liquid ammonia cannot be recycled directly to the cracking system, *i.e.*, without first being at least heated and vaporised. There are, however, many options for enabling this recycle. For example, the recovered liquid ammonia could be dropped in pressure and returned to the storage tank (not shown); or pumped separately to feed pressure before being combined with the pumped liquid ammonia and heated and vaporised in heat exchangers E271, E312, E311 and E310; or dropped in pressure and fed directly to the feed pump P101; or reduced to an intermediate pressure and fed to a "break tank" between the feed pump P101 and heat exchanger E271.

However, stream 309 of recovered liquid ammonia is depicted in FIG. 3 as being fed to the heat exchanger 306 where it is warmed by heat exchange to produce warmed liquid ammonia which is reduced in pressure across valve 350 and fed as stream 310 to a further separator 311. It should be noted that the warming of the recovered liquid ammonia in heat exchanger 306 is optional and that stream 309 could simply be dropped in pressure across valve 350 to form the two-phase feed to separator 311. Separator 311 may be a break tank, the storage tank, or a separate vessel.

Stream 312 of recovered liquid ammonia may be recycled in line with one of the options discussed above. For example, stream 312 could be combined with stream 2 in FIG. 2. In addition, flash vapor (stream 313) resulting from the pressure reduction may be sent as part of the flow in stream 44 to the burners in the radiant section of the furnace F201 *via* heat exchanger E2112.

According to the present invention, residual hydrogen is recovered from the ammonia-lean offgas.

In embodiments in which the ammonia-lean offgas is at least essentially free of ammonia, *i.e.*, no more than trace levels of ammonia (*e.g.*, no more than 1 ppm) are present, then the ammonia-lean offgas itself may be cooled and partially condensed in heat exchanger 306 and then separated to produce the hydrogen-rich gas and the nitrogen-rich liquid.

In other embodiments in which the ammonia-lean offgas contains more than trace amounts of ammonia, the ammonia would need to be removed before the offgas is cooled to avoid ammonia freezing out and thereby blocking the heat exchanger, *etc.* In these embodiments, ammonia may be removed from the ammonia-lean offgas by adsorption, *e.g.*, in a TSA unit.

The ammonia-lean offgas need not be warmed prior to removal of residual ammonia in the adsorption process. Alternatively, the ammonia-lean offgas is first warmed as depicted in FIG. 3. In this regard, stream 314 of ammonia-lean offgas from the first separator 308 comprising predominantly nitrogen (*e.g.*, about 66%) with some hydrogen (*e.g.*, about 33%) and residual ammonia (*e.g.*, up to about 1%), is fed to heat exchanger 306 where it is warmed by heat exchange to ambient temperature to provide cooling to the feed streams to the warm end of the heat exchanger 306 and produce a stream 315 of warmed ammonia-lean offgas which is fed to an ammonia removal unit 316 (*e.g.,* a TSA unit) where residual ammonia is removed to form a stream 317 of ammonia-free offgas. The residual ammonia is removed from the gas as it would otherwise freeze out in the next step.

At this point, the Inventors note that ammonia alone could be recovered using part of this process by using stream 315 as fuel in the ammonia cracking system, *i.e.*, without recovering hydrogen from this stream. Refrigeration would be provided by expanding stream 315 to provide refrigeration to the heat exchanger 306, since the fuel to the burners is required at low pressure, or another source of refrigeration could be provided, *e.g.*, by expanding another process stream or external stream available at pressure, possibly as part of an open-loop or closed-loop refrigeration system, and stream 315 could then be warmed to ambient temperature or greater before expansion, such as by using the waste heat generating by compression, so as to maximise the power recovered from expanding stream 315. The inventors have found that this arrangement provides some (but not all) of the benefits of the present invention, particularly if combined with operating a purge gas compressor to achieve 95% recovery in the PSA.

The ammonia-free offgas in stream 317 is fed to heat exchanger 306 where it is cooled by heat exchange to about -187°C thereby condensing nitrogen to form a stream 318 of partially condensed fluid. The pressure of stream 318 is optionally reduced, *e.g.*, to about 10.9 bar, across a first Joule-Thomson (or JT) valve 351 and fed to a second separator 319 where the vapour and liquid phases of the fluid are separated to form a stream 320 of a hydrogen-rich gas comprising, *e.g.*, about 80% hydrogen, and a stream 324 of a nitrogen-rich liquid comprising, *e.g.*, about 97.8% nitrogen.

In embodiments where a pure nitrogen product is required, the nitrogen-rich liquid may be fed to a distillation column (not shown) where it is separated into pure liquid nitrogen and hydrogen-enriched overhead vapour. In FIG. 3, however, the pressure of the stream 324 of the impure liquid nitrogen from the second separator 319 is depicted in FIG. 3 as being reduced across a second JT valve 352 (*e.g.*, to about 3.8 bar) to reduce its temperature, and the resultant two-phase fluid is separated in a third separator 325 to form a stream 328 of nitrogen-enriched liquid comprising, *e.g.*, about 99.5% nitrogen, and a stream 326 of hydrogen-enriched flash gas, *e.g.*, comprising about 55% hydrogen.

The first phase separator 308 (and the further phase separator 311) may be referred to as an intermediate temperature separator, or even a "warm" separator whereas the second phase separator 319 and third phase separator 325 may each be referred to as a "cold end" separator.

The hydrogen-enriched flash gas in stream 326 may be warmed separately through the heat exchanger 306 (thereby providing refrigeration duty to the feed streams) before being recycled to an appropriate point in the compression system 301, *i.e.,* a point in the compression system from the feed end to the product end, which is at the highest pressure so as to receive the recycle stream with the minimum loss of pressure, such as at an intermediate stage of the compression system 301. In FIG. 3, however, stream 326 is recycled after pressure reduction across valve 353 as stream 327 to the feed to the compression system 301.

In FIG. 3, stream 327 is depicted as being combined with the feed stream 300 of PSA offgas to the compression system 301. However, in embodiments in which the compression system 301 is a multistage compressor, stream 327 may be recycled to an intermediate stage of the compression system 301 as appropriate.

Alternatively, the warmed hydrogen-enriched flash gas can be mixed with the waste nitrogen gas described in the next step, and similarly used as regeneration gas in dryer 304 and/or unit 316, as burner fuel or vented.

Stream 318 of partially condensed fluid is optionally reduced in pressure so that it can provide the cold end temperature difference to the heat exchanger 306 to cool the ammonia-free offgas in stream 317 to the required temperature, *e.g.*, about -187°C. Reducing the pressure of the partially condensed fluid improves hydrogen recovery and increases the surface tension of the liquid phase, thereby improving vapour-liquid separation.

The stream 328 of nitrogen-rich liquid is then vaporized and warmed by heat exchange in heat exchanger 306 (thereby providing refrigeration duty to the process) and fed as stream 329 to an expander 330 where the gas is reduced in pressure, to provide a stream 331 of cold waste nitrogen gas which is then warmed to ambient, providing further cooling to the warmer end of the heat exchanger 306 and forming a stream 332 of warmed waste nitrogen gas.

The expansion work can optionally (or preferably) be harnessed to generate electrical power or power that can be used to drive (either in whole or in part) a compression system, *e.g.*, compression system 301 and/or compression system 322 discussed further below.

In some embodiments, the third separator 325 may be omitted. In these embodiments, stream 324 of nitrogen-rich liquid is not reduced in pressure but is instead warmed by heat exchange in heat exchanger 306 and expanded in expander 330, and the resultant cooled nitrogen gas used to provide further refrigeration duty at the warmer end of the heat exchanger 306.

Stream 332 of waste nitrogen gas may contain enough hydrogen to make a positive impact on the fuel to the burners of the ammonia cracker system, even though it contains over 98% nitrogen. The gas is also useful as a regeneration gas for adsorbent beds, *e.g.*, in the dryer 304 and/or, where applicable, in the ammonia removal unit 316. Therefore, portions of this stream may be used regenerate those beds (not shown). The regeneration outlet gas (containing the rejected water and/or ammonia impurities from the beds) may then be recombined with the unused portion of the gas to form a waste gas (not shown) which in turn may be combined with any flash gas 313 generated from reducing the pressure of the recycled ammonia to form a combined waste gas (not shown). The combined waste gas is fed as stream 44 to heat exchanger E2112 on the way to the burners in the radiant section of the furnace F201 to be used as fuel, similar to operation of the cracker in the reference process.

The warmed hydrogen-rich gas is fed as stream 321 to a compression system 322 where it is compressed to form a stream 323 of compressed hydrogen-rich gas which is fed back to the PSA system U501 to recover hydrogen. The warmed hydrogen-rich gas or the compressed hydrogen-rich gas could also be used as regeneration gas for adsorbent beds, *e.g.*, in the ammonia removal unit 316 and/or the dryer 304. This would allow the ammonia picked up by the hydrogen-rich gas during regeneration of either or both systems to be recovered and recycled in the PSA system U501 back to the cryogenic process 200, thereby achieving close to 100% recovery of the ammonia in the cracked ammonia stream 34 back to the cracking process 1.

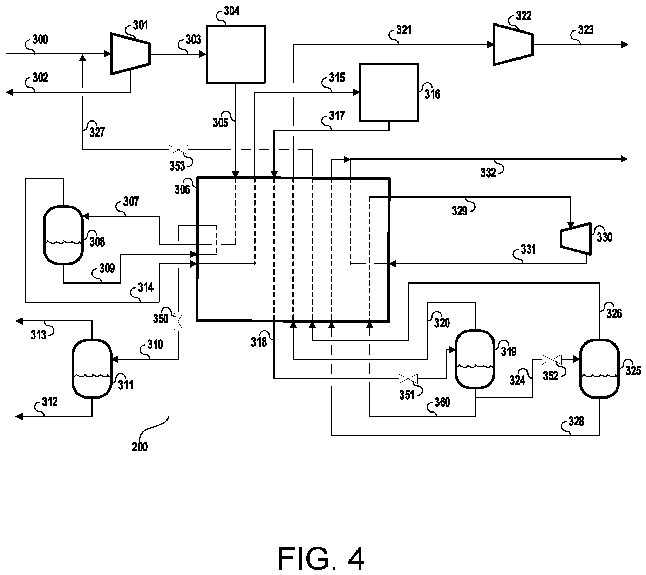

Alternatively, the portion of the gas in stream 332 that is not being used for regeneration (and so is free of ammonia) could be vented rather than being used as part of the offgas fuel stream. This stream is only about 0.5 mol. % hydrogen in the process of FIG. 3 (or about 1.2 mol. % hydrogen in the configuration in FIG. 4). However, if the ammonia cracking system has been designed to burn the offgas from the PSA system without ammonia and hydrogen recovery by cryogenic partial condensation, then its performance would be affected by venting this nitrogen and the performance of the cracker would need to be assessed with a reduced level of nitrogen in the burner fuel, as this nitrogen is heated in the flame and the heat therein released in the convection section.

Stream 320 of hydrogen-rich flash gas from the second separator 319 is warmed to ambient temperature by heat exchange in the heat exchanger 306 to provide cooling to the feed streams. The warmed hydrogen-rich gas is fed as stream 321 to a compression system 322 where it is compressed to form a stream 323 of compressed hydrogen-rich gas which is fed back to the PSA system U501 to recover hydrogen. Although the PSA system U501 is operating at 85% hydrogen recovery, the recycle loop created by the cryogenic recovery process increases the overall hydrogen recovery from the cracked ammonia to over 99%.

Since hydrogen and ammonia have been recovered from the PSA offgas, the heating value of the purge gas to the burners has decreased compared with the reference process. Therefore, there must be an increase in the amount of other fuel 70, such as natural gas, required for the ammonia cracker burners. Thus, although this purge recovery process improves overall hydrogen recovery from the cracker, the carbon intensity of the product hydrogen would be higher. In some areas, the rules around green or renewable hydrogen might mean higher recovery is preferred over lower carbon intensity, but if carbon intensity is to be reduced, the natural gas fuel could be replaced by a lower carbon intensity fuel, *e.g.*, renewable natural gas (RNG), biogas, blue hydrogen, *etc.*

FIG. 4 is a simplified flowsheet depicting a second configuration of the process within the cryogenic recovery system 200 in FIG. 2. The features common to the flowsheets in FIG. 3 and FIG. 4 have been given the same reference numerals. The following is a discussion of the different features.

The nitrogen-rich liquid from the second separator 319 is split into two portions.

A first portion 324 is let down in pressure (to near ambient pressure) across JT valve 352 and fed to the third separator 325. The hydrogen-enriched flash gas 326 generated in the third separator 325 is returned to the warm end *via* the heat exchanger 306, thereby providing refrigeration duty to the feed streams, and used as described above. The nitrogen-enriched liquid 328 generated in the third separator 325 is returned *via* the heat exchanger 306 (thereby providing further cooling to the feed streams) to the warm end as regeneration gas/waste in stream 332.

A second portion 360 of the nitrogen-rich liquid from the second separator 319 is sent directly to the heat exchanger 306 where it is warmed by heat exchange against the dried offgas in stream 305 and/or the ammonia-free offgas in stream 317, and the resultant warmed stream 329 is fed to the expander 330. The expander discharge 331 returns to the warm end through the heat exchanger 306, providing further cooling to the feed streams, and is also used as regeneration gas/waste in stream 332. This configuration allows the returning stream 328 to be colder, *e.g.*, about -198°C, than in the configuration of FIG. 3 (where stream 328 is at about -191°C), allowing stream 318 of partially condensed fluid to be colder, *e.g.*, at about -195°C.

Refrigeration duty for the process can be provided in other ways.

In a first option, a refrigerant may be injected. For example, liquid nitrogen (LIN) could be pumped into the second separator 319 or into the liquid leaving the second separator 319 (*e.g.*, stream 360 in FIG. 4). Injection of LIN in this way has the benefit of increasing the flow of liquid that eventually goes to the expander 330, providing refrigeration in the temperature range where needed. Less preferably, low-pressure LIN could also/instead be added to the third separator 325. Alternatively, some other refrigerant, *e.g.*, a hydrocarbon-based refrigerant, could be used. Such a refrigerant would have to be a separate circuit of the heat exchanger 306 and would possibly include, for example, a closed-loop compression-expansion refrigeration system.

A second option would be to increase the discharge pressure of the compression system 301 which would eventually translate into a higher-pressure ratio over the expander 330.

These options may be desirable if, for example, the ammonia content in the PSA offgas 300 is higher than anticipated, thereby requiring extra refrigeration to condense the additional ammonia. However, either or both could also form part of the basic process.

The ammonia feed in stream 2 could also be used as a refrigerant in heat exchanger 306 thereby warming the ammonia feed to the cracking process. This option takes away from the glycol integration used to provide intercooling for the PSA offgas compressor 301. In addition, the ammonia feed is at a temperature of about -33°C which is warmer than ideal for providing refrigeration duty in heat exchanger 306. Refrigeration duty to condense ammonia in stream 305 is required down to about -70°C.

Heat exchange 306 is depicted as a single heat exchanger having multiple passages for various process streams to be cooled by heat exchange with one or more of the (internal and/or external) refrigerant streams. However, it will be appreciated that heat exchanger 306 may be replaced in other embodiments with a plurality of individual heat exchangers. In preferred embodiments, the heat exchange system is a multiple pass brazed aluminum heat exchanger.

In cases where the dryer 304 and/or the ammonia removal unit 316 are adsorption-based units (*e.g.*, TSA), details of the adsorption cycle such as the regeneration step can be carefully planned. For example, the adsorption cycles can be staggered to avoid simultaneous transient disturbances in the otherwise steady-state process. The regeneration gas can be formed from a stream that is recycled, *e.g.*, warmed hydrogen-rich gas stream 321 or compressed hydrogen-rich gas stream 323, allowing ammonia desorbed from the bed(s) to be recycled for improved ammonia recovery.

Ideally, the drier adsorbent would have a negligible capacity for ammonia. In the case that the drier adsorbent also co-adsorbs at least a portion of the ammonia in the feed, the regeneration gas for at least the final portion of the regeneration step could be selected from available ammonia-containing vapor streams. This could include the dry stream 305, the regeneration outlet gas from the ammonia removal unit 316, or other process stream. A parallel feed step can also be employed. If using an ammonia-lean or ammonia-free stream to regenerate the dryer beds, anhydrous ammonia can also be recycled from the process, *e.g.*, from stream 309, and injected into stream 305 to achieve a constant ammonia composition to the heat exchanger 306.

The present invention will now be illustrated by the following non-limiting examples.

REFERENCE EXAMPLE

The process depicted in FIG. 1 has been simulated by computer (Aspen Plus, ver. 10, Aspen Technology, Inc., Massachusetts, USA) for a plant designed to produce 35 tonnes/day hydrogen (stream 40) from an ammonia feed of 8897 kg/h.

The activities of the ruthenium-based catalyst and nickel-based catalyst in the adiabatic reactors and in the tubes were modelled using rate equation No. 9 given in Lamb et al (Int. J. Hydrogen Energy, 44 (2019) pp 3726-3736) as a basis. For the purpose of the simulation, it was assumed that the activity of the ruthenium-based catalyst conformed to the rate equation but that the activity of the nickel-based catalyst was 20% of that predicted by the rate equation.
The resultant heat and mass balance (HMB) data are provided in Table 2.

TABLE 2

| | 2 | 4 | 6 | 8 | 10 | 12 | 14 | 16 | 18 | 20 |
|---|---|---|---|---|---|---|---|---|---|---|
| Composition, mol% | | | | | | | | | | |
| Hydrogen | 0.00 | 0.00 | 0.00 | 0.00 | 0.00 | 0.00 | 0.00 | 7.75 | 7.75 | 29.83 |
| Nitrogen | 0.00 | 0.00 | 0.00 | 0.00 | 0.00 | 0.00 | 0.00 | 2.58 | 2.58 | 9.94 |
| Ammonia | 99.81 | 99.81 | 99.81 | 99.81 | 99.81 | 99.81 | 99.81 | 89.49 | 89.49 | 60.07 |
| Water | 0.19 | 0.19 | 0.19 | 0.19 | 0.19 | 0.19 | 0.19 | 0.18 | 0.18 | 0.15 |
| Oxygen | 0.00 | 0.00 | 0.00 | 0.00 | 0.00 | 0.00 | 0.00 | 0.00 | 0.00 | 0.00 |
| Argon | 0.00 | 0.00 | 0.00 | 0.00 | 0.00 | 0.00 | 0.00 | 0.00 | 0.00 | 0.00 |
| Carbon Dioxide | 0.00 | 0.00 | 0.00 | 0.00 | 0.00 | 0.00 | 0.00 | 0.00 | 0.00 | 0.00 |
| Flowrate, kmol/h | 522.4 | 522.4 | 522.4 | 522.4 | 522.4 | 522.4 | 522.4 | 550.8 | 550.8 | 652.0 |
| Flowrate, kg/h | 8897 | 8897 | 8897 | 8897 | 8897 | 8897 | 8897 | 8897 | 8897 | 8897 |
| Pressure, bar (a) | 1.00 | 46.41 | 46.01 | 45.61 | 45.21 | 44.81 | 42.81 | 41.31 | 40.31 | 38.81 |
| Temperature, °C | -33.69 | -32.16 | 53.00 | 77.04 | 95.00 | 260.00 | 420.00 | 357.00 | 590.00 | 387.00 |

| | 22 | 24 | 26 | 28 | 30 | 32 | 34 | 40 | 44 | 46 |
|---|---|---|---|---|---|---|---|---|---|---|
| Composition, mol% | | | | | | | | | | |
| Hydrogen | 29.83 | 73.93 | 73.93 | 73.93 | 73.93 | 73.93 | 73.93 | 100.00 | 12.42 | 12.42 |
| Nitrogen | 9.94 | 24.64 | 24.64 | 24.64 | 24.64 | 24.64 | 24.64 | 0.00 | 82.78 | 82.78 |
| Ammonia | 60.07 | 1.33 | 1.33 | 1.33 | 1.33 | 1.33 | 1.33 | 0.00 | 4.48 | 4.48 |
| Water | 0.15 | 0.10 | 0.10 | 0.10 | 0.10 | 0.10 | 0.10 | 0.00 | 0.32 | 0.32 |
| Oxygen | 0.00 | 0.00 | 0.00 | 0.00 | 0.00 | 0.00 | 0.00 | 0.00 | 0.00 | 0.00 |
| Argon | 0.00 | 0.00 | 0.00 | 0.00 | 0.00 | 0.00 | 0.00 | 0.00 | 0.00 | 0.00 |
| Carbon Dioxide | 0.00 | 0.00 | 0.00 | 0.00 | 0.00 | 0.00 | 0.00 | 0.00 | 0.00 | 0.00 |
| Flowrate, kmol/h | 652.0 | 1030.0 | 1030.0 | 1030.0 | 1030.0 | 1030.0 | 1030.0 | 723.4 | 306.6 | 225.5 |
| Flowrate, kg/h | 8897 | 8897 | 8897 | 8897 | 8897 | 8897 | 8897 | 1458 | 7439 | 5471 |
| Pressure, bar (a) | 38.41 | 35.41 | 35.01 | 34.61 | 34.21 | 33.81 | 33.41 | 32.71 | 1.21 | 1.31 |
| Temperature, °C | 500.00 | 629.90 | 530.12 | 388.75 | 108.71 | 69.46 | 50.00 | 49.99 | 34.97 | 45.00 |

| | 58 | 60 | 62 | 64 | 72 | 74 | 76 | 78 | 80 | 82 |
|---|---|---|---|---|---|---|---|---|---|---|
| Composition, mol% | | | | | | | | | | |
| Hydrogen | 12.42 | 12.42 | 0.00 | 0.00 | 0.00 | 0.00 | 0.00 | 0.00 | 0.00 | 0.00 |
| Nitrogen | 82.78 | 82.78 | 77.27 | 77.27 | 78.58 | 78.58 | 78.58 | 78.58 | 78.58 | 78.58 |
| Ammonia | 4.48 | 4.48 | 0.00 | 0.00 | 0.00 | 0.00 | 0.00 | 0.00 | 0.00 | 0.00 |
| Water | 0.32 | 0.32 | 1.05 | 1.05 | 15.68 | 15.68 | 15.68 | 15.68 | 15.68 | 15.68 |
| Oxygen | 0.00 | 0.00 | 20.73 | 20.73 | 1.15 | 1.15 | 1.15 | 1.15 | 1.15 | 1.15 |
| Argon | 0.00 | 0.00 | 0.92 | 0.92 | 0.56 | 0.56 | 0.56 | 0.56 | 0.56 | 0.56 |
| Carbon Dioxide | 0.00 | 0.00 | 0.03 | 0.03 | 4.04 | 4.04 | 4.04 | 4.04 | 4.04 | 4.04 |
| Flowrate, kmol/h | 225.5 | 306.6 | 502.7 | 502.7 | 826.5 | 826.5 | 826.5 | 826.5 | 826.5 | 826.5 |
| Flowrate, kg/h | 5471 | 7439 | 14502 | 14502 | 22485 | 22485 | 22485 | 22485 | 22485 | 22485 |
| Pressure, bar (a) | 33.24 | 1.20 | 1.01 | 1.06 | 1.01 | 1.00 | 0.97 | 0.95 | 0.95 | 1.02 |

(continued)

|  | 58 | 60 | 62 | 64 | 72 | 74 | 76 | 78 | 80 | 82 |
|---|---|---|---|---|---|---|---|---|---|---|
| Composition, mol% |  |  |  |  |  |  |  |  |  |  |
| Temperature, °C | 50.00 | 137.03 | 15.56 | 268.67 | 685.90 | 456.68 | 301.69 | 157.35 | 120.00 | 131.23 |

EXAMPLE 1

The process depicted in FIG. 2 in which the cryogenic recovery system 200 has the configuration depicted in FIG. 3, has been simulated by computer (Aspen Plus, ver. 10, Aspen Technology, Inc., Massachusetts, USA) using the same parameters as in the Reference Example.

The resultant HMB data for the flowsheet depicted in FIG. 2 are provided in Table 3.

TABLE 3

|  | 2 | 4 | 6 | 8 | 10 | 12 | 14 | 16 | 18 | 20 |
|---|---|---|---|---|---|---|---|---|---|---|
| Composition, mol% |  |  |  |  |  |  |  |  |  |  |
| Hydrogen | 0.00 | 0.00 | 0.00 | 0.00 | 0.00 | 0.00 | 0.00 | 8.16 | 8.16 | 30.72 |
| Nitrogen | 0.00 | 0.00 | 0.00 | 0.00 | 0.00 | 0.00 | 0.00 | 2.72 | 2.72 | 10.24 |
| Ammonia | 99.81 | 99.81 | 99.81 | 99.81 | 99.81 | 99.81 | 99.81 | 88.94 | 88.94 | 58.89 |
| Water | 0.19 | 0.19 | 0.19 | 0.19 | 0.19 | 0.19 | 0.19 | 0.18 | 0.18 | 0.15 |
| Oxygen | 0.00 | 0.00 | 0.00 | 0.00 | 0.00 | 0.00 | 0.00 | 0.00 | 0.00 | 0.00 |
| Argon | 0.00 | 0.00 | 0.00 | 0.00 | 0.00 | 0.00 | 0.00 | 0.00 | 0.00 | 0.00 |
| Carbon Dioxide | 0.00 | 0.00 | 0.00 | 0.00 | 0.00 | 0.00 | 0.00 | 0.00 | 0.00 | 0.00 |
| Flowrate, kmol/h | 522.4 | 534.0 | 534.0 | 534.0 | 534.0 | 534.0 | 534.0 | 564.8 | 564.8 | 671.6 |
| Flowrate, kg/h | 8897 | 9096 | 9096 | 9096 | 9096 | 9096 | 9096 | 9096 | 9096 | 9096 |
| Pressure, bar (a) | 1.00 | 46.41 | 46.01 | 45.61 | 45.21 | 44.81 | 42.81 | 41.31 | 40.31 | 38.81 |
| Temperature, °C | -33.69 | -32.14 | 53.00 | 77.26 | 97.73 | 262.84 | 426.80 | 360.66 | 598.53 | 389.76 |
|  | **22** | **24** | **26** | **28** | **30** | **32** | **34** | **40** | **323** | **300** |
| Composition, mol% |  |  |  |  |  |  |  |  |  |  |
| Hydrogen | 30.72 | 73.92 | 73.92 | 73.92 | 73.92 | 73.92 | 73.92 | 100.00 | 80.35 | 30.82 |
| Nitrogen | 10.24 | 24.64 | 24.64 | 24.64 | 24.64 | 24.64 | 24.64 | 0.00 | 19.65 | 65.77 |
| Ammonia | 58.89 | 1.35 | 1.35 | 1.35 | 1.35 | 1.35 | 1.35 | 0.00 | 0.00 | 3.19 |
| Water | 0.15 | 0.09 | 0.09 | 0.09 | 0.09 | 0.09 | 0.09 | 0.00 | 0.00 | 0.22 |
| Oxygen | 0.00 | 0.00 | 0.00 | 0.00 | 0.00 | 0.00 | 0.00 | 0.00 | 0.00 | 0.00 |
| Argon | 0.00 | 0.00 | 0.00 | 0.00 | 0.00 | 0.00 | 0.00 | 0.00 | 0.00 | 0.00 |
| Carbon Dioxide | 0.00 | 0.00 | 0.00 | 0.00 | 0.00 | 0.00 | 0.00 | 0.00 | 0.00 | 0.00 |
| Flowrate, kmol/h | 671.6 | 1052.9 | 1052.9 | 1052.9 | 1052.9 | 1052.9 | 1052.9 | 777.0 | 169.0 | 444.9 |
| Flowrate, kg/h | 9096 | 9096 | 9096 | 9096 | 9096 | 9096 | 9096 | 1566 | 1204 | 8734 |
| Pressure, bar (a) | 38.41 | 35.41 | 35.01 | 34.61 | 34.21 | 33.81 | 33.41 | 32.56 | 33.26 | 1.21 |
| Temperature, °C | 501.74 | 627.16 | 528.04 | 387.48 | 104.76 | 65.12 | 51.95 | 51.67 | 50.00 | 34.98 |
|  | **44** | **60** | **62** | **64** | **72** | **82** | **302** | **312** |  |  |
| Composition, mol% |  |  |  |  |  |  |  |  |  |  |
| Hydrogen | 0.51 | 0.51 | 0.00 | 0.00 | 0.00 | 0.00 | 0.01 | 0.00 |  |  |
| Nitrogen | 98.46 | 98.46 | 77.27 | 77.27 | 79.46 | 79.46 | 0.01 | 0.00 |  |  |

(continued)

|  | 44 | 60 | 62 | 64 | 72 | 82 | 302 | 312 |  |  |
|---|---|---|---|---|---|---|---|---|---|---|
| Composition, mol% |  |  |  |  |  |  |  |  |  |  |
| Ammonia | 0.87 | 0.87 | 0.00 | 0.00 | 0.00 | 0.00 | 28.77 | 100.00 |  |  |
| Water | 0.16 | 0.16 | 1.05 | 1.05 | 12.81 | 12.81 | 71.20 | 0.00 |  |  |
| Oxygen | 0.00 | 0.00 | 20.73 | 20.73 | 1.20 | 1.20 | 0.00 | 0.00 |  |  |
| Argon | 0.00 | 0.00 | 0.92 | 0.92 | 0.58 | 0.58 | 0.00 | 0.00 |  |  |
| Carbon Dioxide | 0.00 | 0.00 | 0.03 | 0.03 | 5.96 | 5.96 | 0.00 | 0.00 |  |  |
| Flowrate, kmol/h | 263.5 | 263.5 | 543.8 | 543.8 | 857.4 | 857.4 | 0.8 | 11.7 |  |  |
| Flowrate, kg/h | 7317 | 7317 | 15690 | 15690 | 23839 | 23839 | 14 | 199 |  |  |
| Pressure, bar (a) | 1.19 | 1.19 | 1.01 | 1.06 | 1.01 | 1.02 | 35.51 | 1.50 |  |  |
| Temperature, °C | 25.00 | 139.78 | 15.56 | 241.12 | 686.15 | 144.92 | 30.00 | -32.59 |  |  |

The resultant HMB data for the flowsheet depicted in FIG. 3 are provided in Table 4.

TABLE 4

|  | 300 | 302 | 303 | 305 | 307 | 309 | 310 | 312 | 313 | 314 |
|---|---|---|---|---|---|---|---|---|---|---|
| Composition, mol% |  |  |  |  |  |  |  |  |  |  |
| Hydrogen | 30.82 | 0.01 | 31.30 | 31.34 | 31.34 | 0.01 | 0.01 | 0.00 | 8.84 | 32.17 |
| Nitrogen | 65.77 | 0.01 | 65.52 | 65.60 | 65.60 | 0.03 | 0.03 | 0.00 | 20.29 | 67.34 |
| Ammonia | 3.19 | 28.77 | 3.09 | 3.06 | 3.06 | 99.95 | 99.95 | 100.00 | 70.88 | 0.48 |
| Water | 0.22 | 71.20 | 0.09 | 0.00 | 0.00 | 0.00 | 0.00 | 0.00 | 0.00 | 0.00 |
| Oxygen | 0.00 | 0.00 | 0.00 | 0.00 | 0.00 | 0.00 | 0.00 | 0.00 | 0.00 | 0.00 |
| Argon | 0.00 | 0.00 | 0.00 | 0.00 | 0.00 | 0.00 | 0.00 | 0.00 | 0.00 | 0.00 |
| Carbon Dioxide | 0.00 | 0.00 | 0.00 | 0.00 | 0.00 | 0.00 | 0.00 | 0.00 | 0.00 | 0.00 |
| Flowrate, kmol/h | 444.9 | 0.8 | 452.2 | 451.6 | 451.6 | 11.7 | 11.7 | 11.7 | 0.0 | 439.9 |
| Flowrate, kg/h | 8734 | 14 | 8831 | 8820 | 8820 | 199 | 199 | 199 | 0 | 8621 |
| Pressure, bar (a) | 1.21 | 35.51 | 35.51 | 35.51 | 35.36 | 35.36 | 35.16 | 1.50 | 1.50 | 35.36 |
| Temperature, °C | 34.98 | 30.00 | 30.00 | 30.00 | -68.00 | -68.00 | -33.00 | -32.59 | -32.59 | -68.00 |
|  | **315** | **317** | **318** | **320** | **321** | **323** | **324** | **326** | **327** | **329** |
| Composition, mol% |  |  |  |  |  |  |  |  |  |  |
| Hydrogen | 32.17 | 32.33 | 32.33 | 80.35 | 80.35 | 80.35 | 2.15 | 54.95 | 54.95 | 0.51 |
| Nitrogen | 67.34 | 67.67 | 67.67 | 19.65 | 19.65 | 19.65 | 97.85 | 45.05 | 45.05 | 99.49 |
| Ammonia | 0.48 | 0.00 | 0.00 | 0.00 | 0.00 | 0.00 | 0.00 | 0.00 | 0.00 | 0.00 |
| Water | 0.00 | 0.00 | 0.00 | 0.00 | 0.00 | 0.00 | 0.00 | 0.00 | 0.00 | 0.00 |
| Oxygen | 0.00 | 0.00 | 0.00 | 0.00 | 0.00 | 0.00 | 0.00 | 0.00 | 0.00 | 0.00 |
| Argon | 0.00 | 0.00 | 0.00 | 0.00 | 0.00 | 0.00 | 0.00 | 0.00 | 0.00 | 0.00 |
| Carbon Dioxide | 0.00 | 0.00 | 0.00 | 0.00 | 0.00 | 0.00 | 0.00 | 0.00 | 0.00 | 0.00 |
| Flowrate, kmol/h | 439.9 | 437.8 | 437.8 | 169.0 | 169.0 | 169.0 | 268.8 | 8.1 | 8.1 | 260.8 |
| Flowrate, kg/h | 8621 | 8585 | 8585 | 1204 | 1204 | 1204 | 7381 | 111 | 111 | 7270 |
| Pressure, bar (a) | 35.21 | 35.21 | 35.06 | 10.87 | 10.57 | 33.26 | 10.87 | 3.83 | 3.53 | 3.53 |
| Temperature, °C | 26.85 | 26.85 | -187.07 | - 190.68 | 26.85 | 50.00 | - 190.68 | - 191.44 | 26.85 | -32.03 |

(continued)

|  | 331 | 332 | 360 |  |  |  |  |  |  |  |
|---|---|---|---|---|---|---|---|---|---|---|
| Composition, mol% |  |  |  |  |  |  |  |  |  |  |
| Hydrogen | 0.51 | 0.51 | 0.51 |  |  |  |  |  |  |  |
| Nitrogen | 99.49 | 99.49 | 99.49 |  |  |  |  |  |  |  |
| Ammonia | 0.00 | 0.00 | 0.00 |  |  |  |  |  |  |  |
| Water | 0.00 | 0.00 | 0.00 |  |  |  |  |  |  |  |
| Oxygen | 0.00 | 0.00 | 0.00 |  |  |  |  |  |  |  |
| Argon | 0.00 | 0.00 | 0.00 |  |  |  |  |  |  |  |
| Carbon Dioxide | 0.00 | 0.00 | 0.00 |  |  |  |  |  |  |  |
| Flowrate, kmol/h | 260.8 | 260.8 | 260.8 |  |  |  |  |  |  |  |
| Flowrate, kg/h | 7270 | 7270 | 7270 |  |  |  |  |  |  |  |
| Pressure, bar (a) | 1.50 | 1.40 | 3.83 |  |  |  |  |  |  |  |
| Temperature, °C | -70.04 | 26.85 | -191.44 |  |  |  |  |  |  |  |

The data indicate that hydrogen is produced (stream 40) at a rate of 1566 kg/h (or 37.59 tonnes/d) and that hydrogen recovery is 99.16%, representing an improvement of 6.8 percentage points over the Reference Example.

EXAMPLE 2

The process depicted in FIG. 2 in which the cryogenic recovery system 200 has the configuration depicted in FIG. 4, has been simulated by computer (Aspen Plus, ver. 12.1, Aspen Technology, Inc., Massachusetts, USA) using the same parameters as in the Reference Example.

The resultant HMB data for the flowsheet depicted in FIG. 2 are provided in Table 5.

TABLE 5

|  | 2 | 4 | 6 | 8 | 10 | 12 | 14 | 16 | 18 | 20 |
|---|---|---|---|---|---|---|---|---|---|---|
| (mol%) |  |  |  |  |  |  |  |  |  |  |
| $H_2$ | 0.00 | 0.00 | 0.00 | 0.00 | 0.00 | 0.00 | 0.00 | 8.15 | 8.15 | 30.70 |
| $N_2$ | 0.00 | 0.00 | 0.00 | 0.00 | 0.00 | 0.00 | 0.00 | 2.72 | 2.72 | 10.23 |
| $NH_3$ | 99.81 | 99.81 | 99.81 | 99.81 | 99.81 | 99.81 | 99.81 | 88.96 | 88.96 | 58.92 |
| Water | 0.19 | 0.19 | 0.19 | 0.19 | 0.19 | 0.19 | 0.19 | 0.18 | 0.18 | 0.15 |
| $O_2$ | 0.00 | 0.00 | 0.00 | 0.00 | 0.00 | 0.00 | 0.00 | 0.00 | 0.00 | 0.00 |
| Ar | 0.00 | 0.00 | 0.00 | 0.00 | 0.00 | 0.00 | 0.00 | 0.00 | 0.00 | 0.00 |
| $CO_2$ | 0.00 | 0.00 | 0.00 | 0.00 | 0.00 | 0.00 | 0.00 | 0.00 | 0.00 | 0.00 |
| Flowrate, kmol/h | 522.4 | 533.7 | 533.7 | 533.7 | 533.7 | 533.7 | 533.7 | 564.4 | 564.4 | 671.1 |
| Flowrate, kg/h | 8897 | 9091 | 9091 | 9091 | 9091 | 9091 | 9091 | 9091 | 9091 | 9091 |
| P (bar a) | 1.00 | 46.41 | 46.01 | 45.61 | 45.21 | 44.81 | 42.81 | 41.31 | 40.31 | 38.81 |
| T (°C) | -33.69 | -32.14 | 53.00 | 77.26 | 97.68 | 262.79 | 426.59 | 360.55 | 598.38 | 389.69 |
|  |  |  |  |  |  |  |  |  |  |  |
|  | 22 | 24 | 26 | 28 | 30 | 32 | 34 | 40 | 323 | 300 |
| (mol%) |  |  |  |  |  |  |  |  |  |  |
| $H_2$ | 30.70 | 73.92 | 73.92 | 73.92 | 73.92 | 73.92 | 73.92 | 100.00 | 89.19 | 31.98 |
| $N_2$ | 10.23 | 24.64 | 24.64 | 24.64 | 24.64 | 24.64 | 24.64 | 0.00 | 10.81 | 64.47 |

(continued)

|  | 22 | 24 | 26 | 28 | 30 | 32 | 34 | 40 | 323 | 300 |
|---|---|---|---|---|---|---|---|---|---|---|
| (mol%) |  |  |  |  |  |  |  |  |  |  |
| $NH_3$ | 58.92 | 1.35 | 1.35 | 1.35 | 1.35 | 1.35 | 1.35 | 0.00 | 0.00 | 3.32 |
| Water | 0.15 | 0.09 | 0.09 | 0.09 | 0.09 | 0.09 | 0.09 | 0.00 | 0.00 | 0.23 |
| $O_2$ | 0.00 | 0.00 | 0.00 | 0.00 | 0.00 | 0.00 | 0.00 | 0.00 | 0.00 | 0.00 |
| Ar | 0.00 | 0.00 | 0.00 | 0.00 | 0.00 | 0.00 | 0.00 | 0.00 | 0.00 | 0.00 |
| $CO_2$ | 0.00 | 0.00 | 0.00 | 0.00 | 0.00 | 0.00 | 0.00 | 0.00 | 0.00 | 0.00 |
| Flowrate, kmol/h | 671.1 | 1052.3 | 1052.3 | 1052.3 | 1052.3 | 1052.3 | 1052.3 | 774.1 | 149.0 | 427.2 |
| Flowrate, kg/h | 9091 | 9091 | 9091 | 9091 | 9091 | 9091 | 9091 | 1561 | 719 | 8249 |
| P (bar a) | 38.41 | 35.41 | 35.01 | 34.61 | 34.21 | 33.81 | 33.41 | 32.56 | 33.26 | 1.21 |
| T (°C) | 501.71 | 627.16 | 528.01 | 387.42 | 104.75 | 65.11 | 51.94 | 51.69 | 50.00 | 34.98 |

|  | 44 | 60 | 62 | 64 | 72 | 74 | 76 | 78 | 80 | 82 |
|---|---|---|---|---|---|---|---|---|---|---|
| (mol%) |  |  |  |  |  |  |  |  |  |  |
| $H_2$ | 1.38 | 1.38 | 0.00 | 0.00 | 0.00 | 0.00 | 0.00 | 0.00 | 0.00 | 0.00 |
| $N_2$ | 97.41 | 97.41 | 77.27 | 77.27 | 79.40 | 79.40 | 79.40 | 79.40 | 79.40 | 79.40 |
| $NH_3$ | 1.00 | 1.00 | 0.00 | 0.00 | 0.00 | 0.00 | 0.00 | 0.00 | 0.00 | 0.00 |
| Water | 0.21 | 0.21 | 1.05 | 1.05 | 12.97 | 12.97 | 12.97 | 12.97 | 12.97 | 12.97 |
| $O_2$ | 0.00 | 0.00 | 20.73 | 20.73 | 1.19 | 1.19 | 1.19 | 1.19 | 1.19 | 1.19 |
| Ar | 0.00 | 0.00 | 0.92 | 0.92 | 0.58 | 0.58 | 0.58 | 0.58 | 0.58 | 0.58 |
| $CO_2$ | 0.00 | 0.00 | 0.03 | 0.03 | 5.86 | 5.86 | 5.86 | 5.86 | 5.86 | 5.86 |
| Flowrate, kmol/h | 266.2 | 266.2 | 542.1 | 515.0 | 856.4 | 856.4 | 856.4 | 856.4 | 856.4 | 856.4 |
| Flowrate, kg/h | 7326 | 7326 | 15639 | 14857 | 23782 | 23782 | 23782 | 23782 | 23782 | 23782 |
| P (bar a) | 1.19 | 1.19 | 1.01 | 1.06 | 1.01 | 1.00 | 0.97 | 0.95 | 0.95 | 1.02 |
| T (°C) | 25.00 | 139.25 | 15.56 | 252.40 | 686.10 | 455.97 | 300.05 | 167.70 | 133.16 | 144.71 |

The resultant HMB data for the flowsheet depicted in FIG. 4 are provided in Table 6.

TABLE 6

|  | 300 | 302 | 303 | 305 | 307 | 309 | 310 | 312 | 313 | 314 |
|---|---|---|---|---|---|---|---|---|---|---|
| Composition, mol% |  |  |  |  |  |  |  |  |  |  |
| Hydrogen | 31.98 | 0.01 | 32.17 | 32.22 | 32.22 | 0.01 | 0.01 | 0.00 | 9.01 | 33.10 |
| Nitrogen | 64.47 | 0.01 | 64.45 | 64.55 | 64.55 | 0.02 | 0.02 | 0.00 | 20.50 | 66.30 |
| Ammonia | 3.32 | 25.82 | 3.26 | 3.23 | 3.23 | 99.96 | 99.96 | 100.00 | 70.48 | 0.60 |
| Water | 0.23 | 74.16 | 0.13 | 0.00 | 0.00 | 0.00 | 0.00 | 0.00 | 0.00 | 0.00 |
| Oxygen | 0.00 | 0.00 | 0.00 | 0.00 | 0.00 | 0.00 | 0.00 | 0.00 | 0.00 | 0.00 |
| Argon | 0.00 | 0.00 | 0.00 | 0.00 | 0.00 | 0.00 | 0.00 | 0.00 | 0.00 | 0.00 |
| Carbon Dioxide | 0.00 | 0.00 | 0.00 | 0.00 | 0.00 | 0.00 | 0.00 | 0.00 | 0.00 | 0.00 |
| Flowrate, kmol/h | 427.2 | 0.6 | 430.5 | 429.8 | 429.8 | 11.4 | 11.4 | 11.3 | 0.0 | 418.4 |
| Flowrate, kg/h | 8249 | 11 | 8300 | 8288 | 8288 | 193 | 193 | 193 | 0 | 8094 |
| Pressure, bar (a) | 1.21 | 26.50 | 26.50 | 26.50 | 26.35 | 26.35 | 26.15 | 1.50 | 1.50 | 26.35 |

(continued)

| | 300 | 302 | 303 | 305 | 307 | 309 | 310 | 312 | 313 | 314 |
|---|---|---|---|---|---|---|---|---|---|---|
| Composition, mol% | | | | | | | | | | |
| Temperature, °C | 34.98 | 30.00 | 30.00 | 30.00 | -68.00 | -68.00 | -33.00 | -32.70 | -32.70 | -68.00 |

| | 315 | 317 | 318 | 320 | 321 | 323 | 324 | 326 | 327 | 328 |
|---|---|---|---|---|---|---|---|---|---|---|
| Composition, mol% | | | | | | | | | | |
| Hydrogen | 33.10 | 33.30 | 33.30 | 89.19 | 89.19 | 89.19 | 2.08 | 47.70 | 47.70 | 0.15 |
| Nitrogen | 66.30 | 66.70 | 66.70 | 10.81 | 10.81 | 10.81 | 97.92 | 52.30 | 52.30 | 99.85 |
| Ammonia | 0.60 | 0.00 | 0.00 | 0.00 | 0.00 | 0.00 | 0.00 | 0.00 | 0.00 | 0.00 |
| Water | 0.00 | 0.00 | 0.00 | 0.00 | 0.00 | 0.00 | 0.00 | 0.00 | 0.00 | 0.00 |
| Oxygen | 0.00 | 0.00 | 0.00 | 0.00 | 0.00 | 0.00 | 0.00 | 0.00 | 0.00 | 0.00 |
| Argon | 0.00 | 0.00 | 0.00 | 0.00 | 0.00 | 0.00 | 0.00 | 0.00 | 0.00 | 0.00 |
| Carbon Dioxide | 0.00 | 0.00 | 0.00 | 0.00 | 0.00 | 0.00 | 0.00 | 0.00 | 0.00 | 0.00 |
| Flowrate, kmol/h | 418.4 | 415.9 | 415.9 | 149.0 | 149.0 | 149.0 | 96.8 | 3.9 | 3.9 | 92.9 |
| Flowrate, kg/h | 8094 | 8051 | 8051 | 719 | 719 | 719 | 2660 | 61 | 61 | 2599 |
| Pressure, bar (a) | 26.20 | 26.20 | 26.05 | 10.74 | 10.44 | 33.26 | 10.74 | 1.50 | 1.40 | 1.50 |
| Temperature, °C | 18.05 | 18.05 | -195.00 | -196.56 | 18.05 | 50.00 | -196.56 | -198.05 | 18.05 | -198.05 |

| | 329 | 331 | 332 | 360 | | | | | | |
|---|---|---|---|---|---|---|---|---|---|---|
| Composition, mol% | | | | | | | | | | |
| Hydrogen | 2.08 | 2.08 | 1.40 | 2.08 | | | | | | |
| Nitrogen | 97.92 | 97.92 | 98.60 | 97.92 | | | | | | |
| Ammonia | 0.00 | 0.00 | 0.00 | 0.00 | | | | | | |
| Water | 0.00 | 0.00 | 0.00 | 0.00 | | | | | | |
| Oxygen | 0.00 | 0.00 | 0.00 | 0.00 | | | | | | |
| Argon | 0.00 | 0.00 | 0.00 | 0.00 | | | | | | |
| Carbon Dioxide | 0.00 | 0.00 | 0.00 | 0.00 | | | | | | |
| Flowrate, kmol/h | 170.0 | 170.0 | 263.0 | 170.0 | | | | | | |
| Flowrate, kg/h | 4672 | 4672 | 7271 | 4672 | | | | | | |
| Pressure, bar (a) | 10.44 | 1.50 | 1.40 | 10.74 | | | | | | |
| Temperature, °C | -7.68 | -90.37 | 18.05 | -196.56 | | | | | | |

The data indicate that hydrogen is produced (stream 40) at a rate of 1561 kg/h (or 37.46 tonnes/d) and that hydrogen recovery is 98.80%, representing an improvement of about 7 percentage points over the Reference Example.

Summary

A summary of the key data for the exemplified processes is provided in Table 7.

TABLE 7

| | | FIG. 1 | FIG. 3 | FIG. 4 |
|---|---|---|---|---|
| Ammonia Feed | kg/h | 8897 | 8897 | 8897 |
| Hydrogen Produced | tonne/d | 35.00 | 37.59 | 37.46 |

(continued)

| | | FIG. 1 | FIG. 3 | FIG. 4 |
|---|---|---|---|---|
| kg $H_2$/kg $NH_3$ | | 0.16 | 0.18 | 0.18 |
| Hydrogen Recovery | % | 92.32% | 99.16% | 98.80% |
| Total Power | kW | 920 | 2263 | 1938 |
| Fuel duty (LHV) | kW | 7302 | 11178 | 10978 |
| spec power | kWh/kg_$H_2$ | 0.63 | 1.44 | 1.24 |
| spec fuel duty (LHV) | kWh/kg_$H_2$ | 5.01 | 7.14 | 7.03 |

The invention provides a higher recovery (99.16% or 98.80%) of hydrogen from ammonia than the prior art (92.32%), but at the cost of additional power and fuel. The increased power and fuel consumption may also increase the carbon intensity of the product hydrogen.

A comparison of the embodiments of the present invention depicted in FIG. 3 and FIG. 4 highlights a similar trade-off, *viz.* higher recovery requires more power and fuel.

Different solutions may be considered better depending on various factors. Such factors could include the relative values of power/fuel/product, carbon intensity constraints or incentives, the carbon intensity of the electricity and fuel sources, *etc.*

While the invention has been described with reference to the preferred embodiments depicted in the figure, it will be appreciated that various modifications are possible within the spirit or scope of the invention as defined in the following claims.

In this specification, unless expressly otherwise indicated, the word "or" is used in the sense of an operator that returns a true value when either or both of the stated conditions are met, as opposed to the operator "exclusive or" which requires only that one of the conditions is met. The word "comprising" is used in the sense of "including" and incorporates "consisting of" rather than meaning "consisting of" exclusively.

All prior teachings above are hereby incorporated herein by reference. No acknowledgement of any prior published document herein should be taken to be an admission or representation that the teaching thereof was common general knowledge in Australia or elsewhere at the date thereof.

**Claims**

1. A process for cracking ammonia comprising:

   providing a heated ammonia gas at super-atmospheric pressure;
   cracking the heated ammonia gas in an ammonia cracking system to produce a cracked gas comprising hydrogen gas, nitrogen gas and residual ammonia gas;
   cooling the cracked gas by heat exchange to produce cooled cracked gas;
   recovering hydrogen from the cooled cracked gas in a hydrogen recovery unit to produce a hydrogen gas product and an offgas comprising nitrogen gas, residual hydrogen gas and residual ammonia gas;
   recovering residual ammonia from at least a portion of the offgas, or from a combined gas comprising the offgas, by partial condensation and phase separation to produce a recovered liquid ammonia and an ammonia-lean offgas comprising nitrogen gas and residual hydrogen gas; and
   recovering residual hydrogen from the ammonia-lean offgas, or from an ammonia-free offgas derived therefrom, by partial condensation and phase separation to produce a hydrogen-rich gas and a nitrogen-rich liquid,

   wherein at least a portion of the recovered liquid ammonia, or of a liquid ammonia derived therefrom, is optionally recycled to the ammonia cracking system.

2. A process according to Claim 1, wherein said recovering residual ammonia from the offgas, or from a combined gas comprising the offgas, comprises:

   compressing the offgas, or the combined gas comprising the offgas, to form a compressed offgas;
   drying the compressed offgas, *e.g.*, in a TSA process, to form a dry, compressed offgas;
   cooling the dry, compressed offgas by heat exchange against one or more "cold" process fluids, to condense residual ammonia and produce partially condensed offgas; and
   phase separating the partially condensed offgas to produce the recovered liquid ammonia and the ammonia-lean offgas.

3. A process according to Claim 1 or Claim 2 comprising:

reducing the pressure of the recovered liquid ammonia to produce reduced pressure liquid ammonia and an ammonia-rich flash gas;
separating the reduced pressure liquid ammonia and the ammonia-rich flash gas; and
recycling the reduced pressure liquid ammonia to the ammonia cracking system.

4. A process according to any of the preceding claims, wherein said recovering residual hydrogen from the ammonia-lean offgas comprises:

cooling the ammonia-lean offgas, or an ammonia-free offgas derived therefrom, by heat exchange against one or more "cold" process fluids, to condense nitrogen and produce a partially condensed fluid; and
separating the partially condensed fluid, optionally after reducing the pressure of the partially condensed fluid, to produce the hydrogen-rich gas and the nitrogen-rich liquid.

5. A process according to any of the preceding claims, wherein more than a trace amount of ammonia is present in the ammonia-lean offgas, said process comprising removing ammonia from the ammonia-lean offgas by an adsorption process, *e.g.*, a TSA process, to produce an ammonia-free offgas.

6. A process according to any of the preceding claims, wherein the hydrogen-rich gas, or a regeneration outlet gas derived therefrom, is recycled to the hydrogen recovery unit,
wherein said recycling of the hydrogen-rich gas optionally comprises:

warming the hydrogen-rich gas by heat exchange against one or more process fluids being cooled, to produce warmed hydrogen-rich gas;
compressing the warmed hydrogen-rich gas to produce a compressed hydrogen-rich gas; and
recycling the compressed hydrogen-rich gas, or a regeneration outlet gas derived therefrom, to the hydrogen recovery unit.

7. A process according to any of the preceding claims, wherein at least a portion of the nitrogen-rich liquid and/or of a nitrogen-enriched liquid derived therefrom, is warmed by heat exchange against one of more process fluids being cooled, to produce a waste nitrogen gas.

8. A process according to any of the preceding claims comprising:

reducing the pressure of at least a portion of the nitrogen-rich liquid to produce reduced pressure nitrogen-enriched liquid and a hydrogen-enriched flash gas;
separating the reduced pressure nitrogen-enriched liquid from the hydrogen-enriched flash gas; and
recycling the hydrogen-enriched flash gas to the offgas from the hydrogen recovery unit, wherein said recycling of the hydrogen-enriched flash gas optionally comprises:

warming the hydrogen-enriched flash gas by heat exchange against one or more process fluids being cooled, to produce warmed hydrogen-enriched flash gas; and
combining the hydrogen-enriched flash gas, or a reduced pressure hydrogen-enriched flash gas derived therefrom, with the offgas from the hydrogen recovery unit at an appropriate point in the compression system, to form the combined gas.

9. Apparatus for cracking ammonia comprising:

an ammonia cracking system comprising an inlet for heated ammonia gas at super-atmospheric pressure and an outlet for cracked gas comprising hydrogen gas, nitrogen gas and residual ammonia gas;
a hydrogen recovery unit comprising an inlet for cooled cracked gas in fluid flow communication with the outlet of the ammonia cracking system, a first outlet for hydrogen gas product and a second outlet for offgas comprising nitrogen gas, residual hydrogen gas and residual ammonia gas;
a first phase separator comprising an inlet for partially condensed offgas in fluid flow communication with the second outlet of the hydrogen recovery unit, a first outlet for recovered liquid ammonia and a second outlet for ammonia-lean offgas comprising nitrogen gas and residual hydrogen gas; and

a second phase separator comprising an inlet for partially condensed ammonia-lean offgas in fluid flow communication with the second outlet of the first phase separator, a first outlet for hydrogen-rich gas and a second outlet for nitrogen-rich liquid, said first outlet optionally being in fluid flow communication with the inlet of the hydrogen recovery unit,

wherein the apparatus comprises a heat exchange system comprising:

a heat exchanger located between the outlet of the ammonia cracking system and the inlet of the hydrogen recovery unit, and arranged to cool cracked gas by heat exchange against ammonia;

a heat exchanger located between the second outlet of the hydrogen recovery unit and the inlet of the first phase separator, and arranged to condense residual ammonia gas in offgas by heat exchange against one of more "cold" process fluids; and

a heat exchanger located between the second outlet of the first phase separator and the inlet of the second phase separator, and arranged to condense nitrogen in ammonia-lean offgas by heat exchange against one of more "cold" process fluids.

10. An apparatus according to Claim 9 comprising:

an offgas compression system comprising an inlet for offgas in fluid flow communication with the second outlet of the hydrogen recovery unit, and an outlet for compressed offgas; and

a dryer, *e.g.*, a TSA unit, comprising an inlet for compressed offgas in fluid flow communication with the outlet of the offgas compression system and an outlet for dry, compressed offgas in fluid flow communication with the inlet of the first phase separator,

said apparatus optionally comprising:

a pressure reducing valve comprising an inlet for recovered liquid ammonia in fluid flow communication with the first outlet of the first phase separator and an outlet for a two-phase fluid comprising reduced pressure liquid ammonia and ammonia-rich flash gas; and

a further phase separator comprising an inlet for a two-phase fluid comprising reduced pressure liquid ammonia and ammonia-rich flash gas in fluid flow communication with the outlet of the pressure reducing valve, a first outlet for liquid ammonia and a second outlet for ammonia-rich flash gas in fluid flow communication with the inlet of the ammonia cracking system.

11. An apparatus according to Claim 9 or Claim 10 comprising:
a pressure reducing valve comprising an inlet in fluid flow communication with the second outlet of the first phase separator and an outlet in fluid flow communication with the inlet of the second phase separator.

12. An apparatus according to any of Claims 9 to 11 comprising:
an ammonia removal unit, *e.g.*, a TSA unit, comprising an inlet for ammonia-lean offgas in fluid flow communication with the second outlet of the first phase separator and an outlet for ammonia-free offgas in fluid flow communication with the inlet of the second phase separator.

13. An apparatus according to any of Claims 9 to 12 comprising:
a recovered hydrogen compression system comprising an inlet for hydrogen-rich gas in fluid flow communication with the first outlet of the second phase separator and an outlet for compressed hydrogen-rich gas in fluid flow communication with the inlet of the hydrogen recovery unit,
wherein the heat exchange system comprises:
a heat exchanger located between the first outlet of the second phase separator and the inlet of the recovered hydrogen compression system, and arranged to warm hydrogen-rich gas by heat exchange against one or more process streams being cooled.

14. An apparatus according to any of Claims 9 to 13 comprising an expander for expanding nitrogen-rich gas, or nitrogen-enriched gas derived therefrom, to generate refrigeration for the process.

15. An apparatus according to any of Claims 9 to 14 comprising:

a pressure reducing valve comprising an inlet for nitrogen-rich liquid in fluid flow communication with the second outlet of the second phase separator and an outlet for a two-phase fluid comprising nitrogen-enriched liquid and hydrogen-enriched gas; and

a third phase separator comprising an inlet for a two-phase fluid comprising nitrogen-enriched liquid and hydrogen-enriched gas in fluid flow communication with the outlet of the pressure reducing valve, a first outlet for nitrogen-enriched liquid and a second outlet for hydrogen-enriched gas in fluid flow communication with an inlet of an offgas compression system.

FIG. 1 (Reference Process)

FIG. 2

FIG. 3

FIG. 4

Europäisches Patentamt
European Patent Office
Office européen des brevets

# EUROPEAN SEARCH REPORT

**Application Number**

EP 25 16 5118

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/242395 A1 (SHAW ANDREW [GB] ET AL) 3 August 2023 (2023-08-03) | 1-6,9-15 | INV. C01B3/50 |
| Y | * paragraph [0088] - paragraph [0107]; | 1-7,9-15 | C01B3/04 |
| A | claim 1; figure 5 * | 8 | |
| | ----- | | ADD. |
| A | WO 2023/076270 A1 (SYZYGY PLASMONICS INC [US]) 4 May 2023 (2023-05-04) * paragraph [0043] - paragraph [0047]; figures 1,2 * | 1-15 | F25J3/06 |
| | ----- | | |
| Y | FR 2 636 543 A1 (AIR LIQUIDE [FR]) 23 March 1990 (1990-03-23) * claims 1-4; figures 1-4 * | 1-7,9-15 | |
| | ----- | | |
| Y | GB 930 682 A (PETROCARBON DEV LTD) 10 July 1963 (1963-07-10) * page 4, line 105 - page 5, line 85; figure 3 * | 1-7,9-15 | |
| | ----- | | |

| | |
|---|---|
| | **TECHNICAL FIELDS SEARCHED (IPC)** |
| | C01B F25J |

The present search report has been drawn up for all claims

| Place of search | Date of completion of the search | Examiner |
|---|---|---|
| Munich | 21 July 2025 | Cristescu, Ioana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 5118

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2025

| Patent document cited in search report | | | Publication date | Patent family member(s) | | | Publication date |
|---|---|---|---|---|---|---|---|
| US 2023242395 | A1 | | 03-08-2023 | CN | 115943119 | A | 07-04-2023 |
| | | | | EP | 4168353 | A1 | 26-04-2023 |
| | | | | US | 2023242395 | A1 | 03-08-2023 |
| | | | | WO | 2021257944 | A1 | 23-12-2021 |
| WO 2023076270 | A1 | | 04-05-2023 | AU | 2022376151 | A1 | 02-05-2024 |
| | | | | CA | 3233701 | A1 | 04-05-2023 |
| | | | | CN | 118401303 | A | 26-07-2024 |
| | | | | EP | 4422793 | A1 | 04-09-2024 |
| | | | | IL | 311943 | A | 01-06-2024 |
| | | | | JP | 2024538034 | A | 18-10-2024 |
| | | | | KR | 20240093892 | A | 24-06-2024 |
| | | | | US | 2025001378 | A1 | 02-01-2025 |
| | | | | WO | 2023076270 | A1 | 04-05-2023 |
| FR 2636543 | A1 | | 23-03-1990 | NONE | | | |
| GB 930682 | A | | 10-07-1963 | BE | 581236 | A | 21-07-2025 |
| | | | | FR | 1233248 | A | 12-10-1960 |
| | | | | GB | 930682 | A | 10-07-1963 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019038251 A
- WO 2022189560 A
- US 20230242395 A
- US 20150217278 A, Masel
- US 5055282 A
- US 5976723 A
- US 20200164346 A
- US 20210001311 A
- US 2021037996 W
- WO 2022265648 A

**Non-patent literature cited in the description**

- **MASEL et al.** *Catalyst Letters*, July 2004, vol. 96 (3-4)
- **LAMB et al.** *Int. J. Hydrogen Energy*, 2019, vol. 44, 3726-3736
- **BOISEN et al.** *J. Catalysis*, 2005, vol. 230, 309-312